# EUROPEAN PATENT APPLICATION

(11) **EP 4 746 503 A1**
(43) Date of publication of application: **20.05.2026**
(21) Application number: 24853543.7
(22) Date of filing: 29.07.2024
(51) Int. Cl.: H04W 28/02

(54) **CONGESTION CONTROL METHOD AND APPARATUS**

(30) Priority: 15.08.2023 CN 202311031159
(71) Applicant: Huawei Technologies Co., Ltd., Shenzhen, Guangdong 518129 (CN)
(72) Inventor: ZHANG, Jian, Shenzhen, Guangdong 518129 (CN); YANG, Yanmei, Shenzhen, Guangdong 518129 (CN)
(74) Representative: Goddar, Heinz J.
(86) International application number: PCT/CN2024/108159
(87) International publication number: WO 2025/036131

(57) **Abstract**

This application provides a congestion control method and apparatus. The method is applied to a data transmission serving end. The data transmission serving end is connected to a plurality of application servers, and is configured to provide a data transmission service for the plurality of application servers. The method includes: when it is determined that network congestion occurs in transmission processes of a plurality of downlink data flows belonging to different applications or different users, performing different congestion control on the plurality of downlink data flows with reference to respective requirement degrees of the plurality of downlink data flows for a low transmission delay, to improve an effect of network congestion control.

## Description

### CROSS-REFERENCE TO RELATED APPLICATIONS

This application claims priority to Chinese Patent Application No. 202311031159.5, filed with the China National Intellectual Property Administration on August 15, 2023 and entitled "CONGESTION CONTROL METHOD AND APPARATUS", which is incorporated herein by reference in its entirety.

### TECHNICAL FIELD

This application relates to the communication field, and in particular, to a congestion control method and apparatus.

### BACKGROUND

Congestion control refers to adjusting a quantity of data packets injected by a transmitting end into a network. For example, the transmitting end may reduce a data packet transmission rate, to reduce a network congestion degree or resolve network congestion. In a conventional congestion control solution, when network congestion occurs on an intermediate node for data transmission, the intermediate node marks an explicit congestion notification (explicit congestion notification, ECN) bit in a packet header of a data packet, so that a receiving end can identify, when receiving the data packet with an ECN marker, that network congestion occurs. Further, the receiving end may notify, by using an ECN feedback mechanism, the transmitting end that the network congestion occurs, and the transmitting end performs congestion control after receiving the notification, to reduce a data packet transmission rate. For the conventional congestion solution, how to further improve a congestion control effect is a problem to be resolved.

### SUMMARY

This application provides a congestion control method and apparatus, to improve an effect of network congestion.

According to a first aspect, in this application, a congestion control method is proposed. The method is applied to a data transmission serving end, the data transmission serving end is connected to a plurality of application servers, and the method includes: determining that network congestion exists in transmission processes of a plurality of downlink data flows, where the plurality of downlink data flows include at least two downlink data flows from different application servers or include at least two downlink data flows belonging to different users; and performing congestion control on the plurality of downlink data flows based on respective service requirement information of the plurality of downlink data flows, where service requirement information of a first data flow includes at least one of QoS requirement information of an application to which the first data flow belongs, a service type, a user type of a user to which the first data flow belongs, and a priority, and the first data flow is any one of the plurality of downlink data flows.

According to the foregoing solution, in this application, it is proposed that the data transmission serving end connected to the plurality of application servers performs congestion control. The data transmission serving end may perform different congestion control on different data flows based on one or more of service types of a plurality of applications, QoS requirement information, user types, and priorities of data flows. Compared with a conventional L4S congestion control solution, in the solution of this application, the data transmission serving end may respectively perform different congestion control on different data flows with reference to requirement degrees of a plurality of data flows for congestion control (for example, low-delay transmission), so that a congestion control effect is better. In addition, because an execution body is the data transmission serving end, functions such as congestion marker identification and congestion feedback do not need to be configured for clients and servers of the applications, thereby reducing application development difficulty.

In some embodiments, determining that the network congestion exists in the transmission processes of the plurality of downlink data flows includes: receiving congestion feedback information that is for the first data flow and that is sent by a first data transmission client, where the first data flow is a downlink data flow sent by a first application server to a first application client, the first application client is any one of a plurality of application clients of the first application server, and the first data transmission client and the first application client are deployed in a first client device; and determining, based on the congestion feedback information, that the network congestion exists in a transmission process of the first data flow.

According to the foregoing solution, a data transmission client that receives data may feed back congestion information to the data transmission serving end when congestion occurs, so that the data transmission serving end can learn of the network congestion in time.

In some embodiments, performing congestion control on the plurality of downlink data flows based on the respective service requirement information of the plurality of downlink data flows includes: controlling transmission rates of the plurality of downlink data flows based on the service requirement information of the plurality of downlink data flows; or respectively indicating, based on the service requirement information of the plurality of downlink data flows, the application servers that send the plurality of downlink data flows to perform congestion control on the plurality of downlink data flows.

According to the foregoing solution, during congestion control, the data transmission serving end may control transmission of each downlink data flow, or may notify an application server to perform control.

In some embodiments, controlling the transmission rates of the plurality of downlink data flows based on the service requirement information of the plurality of downlink data flows includes: determining a target transmission rate of each downlink data flow based on priorities of the plurality of downlink data flows; and controlling transmission of each downlink data flow based on the target transmission rate of each downlink data flow.

In some embodiments, controlling the transmission rates of the plurality of downlink data flows based on the service requirement information of the plurality of downlink data flows includes: determining a target transmission rate of each downlink data flow based on one or more of QoS requirement information, service types, and user types of the plurality of downlink data flows; and controlling transmission of each downlink data flow based on the target transmission rate of each downlink data flow.

In some embodiments, controlling the transmission rates of the plurality of downlink data flows based on the service requirement information of the plurality of downlink data flows includes: determining transmission priorities of the plurality of downlink data flows based on one or more of QoS requirement information, service types, and user types of the plurality of downlink data flows; determining a target transmission rate of each downlink data flow based on the transmission priorities of the plurality of downlink data flows; and controlling transmission of each downlink data flow based on the target transmission rate of the downlink data flow.

According to the foregoing solution, in this application, it is proposed that congestion control may be directly performed based on any one of the service requirement information from the application server, or transmission priorities used to represent requirement degrees of all downlink data flows for a low delay may be first determined by using the service requirement information, and then congestion control is performed based on the transmission priorities.

In some embodiments, respectively indicating, based on the service requirement information of the plurality of downlink data flows, the application servers that send the plurality of downlink data flows to perform congestion control on the plurality of downlink data flows includes: determining the target transmission rate of each downlink data flow based on the service requirement information of the plurality of downlink data flows; and sending a target transmission rate of the first data flow to the first application server that sends the first data flow, to indicate the first application server to control transmission of the first data flow based on the target transmission rate of the first data flow.

In some embodiments, respectively indicating, based on the service requirement information of the plurality of downlink data flows, the application servers that send the plurality of downlink data flows to perform congestion control on the plurality of downlink data flows includes: determining a target encoding format or a target rendering manner of each downlink data flow based on the service requirement information of the plurality of downlink data flows; and sending a target encoding format or a target rendering manner of the first data flow to the first application server that sends the first data flow, to indicate the first application server to output the first data flow based on the target encoding format or the target rendering manner of the first data flow.

In some embodiments, respectively indicating, based on the service requirement information of the plurality of downlink data flows, the application servers that send the plurality of downlink data flows to perform congestion control on the plurality of downlink data flows includes: determining congestion information of each downlink data flow based on the service requirement information of the plurality of downlink data flows, where congestion information of the first data flow indicates a network congestion degree in the transmission process of the first data flow; and sending the congestion information of the first data flow to the first application server that sends the first data flow, to indicate the first application server to perform congestion control on the first data flow based on the congestion information of the first data flow.

According to the foregoing solution, when the application server is indicated to perform congestion control, a transmission rate, a rendering manner, an encoding format, or the like may be directly sent to the application server, to indicate the application server to adjust rates of generating and outputting a data flow; or a congestion degree that is of each data flow and that needs to be fed back to the application server may be determined based on service requirement information of the data flow, to indicate the application server to perform congestion control on the data flow based on the congestion degree.

In some embodiments, before determining that the network congestion exists in the transmission processes of the plurality of downlink data flows, the method further includes: receiving one or more of a service type of a first application, user types of a plurality of users of the first application, QoS requirement information of the first application, and a priority of a downlink data flow belonging to the first application that are sent by the first application server, where the first application server is an application that sends the first data flow, and the first application is an application to which the first data flow belongs.

In some embodiments, the method further includes: sending a first message to a network side device, where the first message indicates the network side device to perform network congestion detection on the downlink data flow belonging to the first application and add a congestion marker.

In some embodiments, the method further includes: sending a second message to the first data transmission client, where the first data transmission client is deployed in the first client device, the first client device is any one of a plurality of client devices of the first application server, and the second message indicates the first data transmission client to perform congestion marker identification on a received downlink data flow belonging to the first application, and indicates the first data transmission client to send congestion feedback information to the data transmission serving end after identifying indicates congestion marker in the downlink data flow of the first application.

According to the foregoing solution, after receiving service feature information, the data transmission serving end determines a data flow on which congestion control needs to be performed, and sends corresponding identification information to the network side device, so that the network side device performs congestion marking; and sends the identification information to the data transmission client, so that the data transmission client performs congestion marker identification.

According to a second aspect, in this application, another congestion control method is proposed. The method is applied to a data transmission client, the data transmission client is deployed in a client device, and the method includes: determining that network congestion exists in transmission processes of a plurality of downlink data flows, where the plurality of downlink data flows include at least two downlink data flows from different application servers; and performing congestion control on the plurality of downlink data flows based on respective service requirement information of the plurality of downlink data flows, where service requirement information of a first data flow includes at least one of QoS requirement information of an application to which the first data flow belongs, a service type, and a priority, and the first data flow is any one of the plurality of downlink data flows.

In some embodiments, determining that the network congestion exists in the transmission processes of the plurality of downlink data flows includes: receiving the first data flow from a network side device, where the first data flow includes a plurality of data packets, a packet header of at least one of the plurality of data packets includes a congestion marker, and the congestion marker indicates that the network congestion exists in a transmission process of the first data flow.

In some embodiments, performing congestion control on the plurality of downlink data flows based on the respective service requirement information of the plurality of downlink data flows includes: indicating, based on the service requirement information of the plurality of downlink data flows, a data transmission serving end to control transmission rates of the plurality of downlink data flows; or respectively indicating, based on the service requirement information of the plurality of downlink data flows, the application servers that send the plurality of downlink data flows to perform congestion control on the plurality of downlink data flows, where the data transmission serving end is connected to the application servers that send the plurality of downlink data flows.

In some embodiments, indicating, based on the service requirement information of the plurality of downlink data flows, the data transmission serving end to control the transmission rates of the plurality of downlink data flows includes: determining a target transmission rate of each downlink data flow based on priorities of the plurality of downlink data flows; and sending the target transmission rate of each downlink data flow to the data transmission serving end, to indicate the data transmission serving end to control transmission of each downlink data flow based on the target transmission rate of each downlink data flow.

In some embodiments, indicating, based on the service requirement information of the plurality of downlink data flows, the data transmission serving end to control the transmission rates of the plurality of downlink data flows includes: determining a target transmission rate of each downlink data flow based on at least one of QoS requirement information and service types of the plurality of downlink data flows; and sending the target transmission rate of each downlink data flow to the data transmission serving end, to indicate the data transmission serving end to control transmission of each downlink data flow based on the target transmission rate of each downlink data flow.

In some embodiments, indicating, based on the service requirement information of the plurality of downlink data flows, the data transmission serving end to control the transmission rates of the plurality of downlink data flows includes: determining transmission priorities of the plurality of downlink data flows based on at least one of QoS requirement information and service types of the plurality of downlink data flows; determining a target transmission rate of each downlink data flow based on the transmission priorities of the plurality of downlink data flows; and sending the target transmission rate of each downlink data flow to the data transmission serving end, to indicate the data transmission serving end to control transmission of each downlink data flow based on the target transmission rate of each downlink data flow.

In some embodiments, respectively indicating, based on the service requirement information of the plurality of downlink data flows, the application servers that send the plurality of downlink data flows to perform congestion control on the plurality of downlink data flows includes: determining the target transmission rate of each downlink data flow based on the service requirement information of the plurality of downlink data flows; and sending a target transmission rate of the first data flow to the first application server that sends the first data flow, to indicate the first application server to control transmission of the first data flow based on the target transmission rate of the first data flow.

In some embodiments, respectively indicating, based on the service requirement information of the plurality of downlink data flows, the application servers that send the plurality of downlink data flows to perform congestion control on the plurality of downlink data flows includes: determining a target encoding format or a target rendering manner of each downlink data flow based on the service requirement information of the plurality of downlink data flows; and sending a target encoding format or a target rendering manner of the first data flow to the first application server that sends the first data flow, to indicate the first application server to output the first data flow based on the target encoding format or the target rendering manner of the first data flow.

In some embodiments, respectively indicating, based on the service requirement information of the plurality of downlink data flows, the application servers that send the plurality of downlink data flows to perform congestion control on the plurality of downlink data flows includes: determining congestion information of each downlink data flow based on the service requirement information of the plurality of downlink data flows, where congestion information of the first data flow indicates a network congestion degree in the transmission process of the first data flow; and sending the congestion information of the first data flow to the first application server that sends the first data flow, to indicate the first application server to perform congestion control on the first data flow based on the congestion information of the first data flow.

In some embodiments, before determining that the network congestion exists in the transmission processes of the plurality of downlink data flows, the method further includes: receiving a second message sent by the data transmission serving end, where the second message indicates to perform congestion marker identification on a received downlink data flow belonging to a first application, and indicate to send congestion feedback information to the data transmission serving end after a congestion marker is identified in the downlink data flow belonging to the first application.

In some embodiments, before determining that the network congestion exists in the transmission processes of the plurality of downlink data flows, the method further includes: receiving one or more of a service type of a first application, QoS requirement information of the first application, and a priority of a downlink data flow belonging to the first application that are sent by a first application client, where the first application is an application to which the first data flow belongs, and the first application client is an application client that receives the first data flow.

In some embodiments, before determining that the network congestion exists in the transmission processes of the plurality of downlink data flows, the method further includes: receiving one or more of service types of applications to which the plurality of downlink data flows respectively belong, QoS requirement information, and priorities of the plurality of downlink data flows that are sent by the data transmission serving end, where the data transmission serving end is connected to the application servers that send the plurality of downlink data flows.

According to a third aspect, in this application, another congestion control method is proposed. The method is applied to a data transmission serving end, the data transmission serving end is connected to a plurality of application servers, and the method includes: determining that network congestion exists in transmission processes of a plurality of uplink data flows, where the plurality of uplink data flows include at least two uplink data flows belonging to different applications or include at least two uplink data flows belonging to different users; and performing congestion control on the plurality of uplink data flows based on respective service requirement information of the plurality of uplink data flows, where service requirement information of a third data flow includes at least one of QoS requirement information of an application to which the third data flow belongs, a service type, a user type of a user to which the third data flow belongs, and a priority, and the third data flow is any one of the plurality of uplink data flows.

In some embodiments, determining that the network congestion exists in the transmission processes of the plurality of uplink data flows includes: receiving the third data flow from a network side device, where the third data flow includes a plurality of data packets, a packet header of at least one of the plurality of data packets includes a congestion marker, and the congestion marker indicates that the network congestion exists in a transmission process of the third data flow.

In some embodiments, performing congestion control on the plurality of uplink data flows based on the respective service requirement information of the plurality of uplink data flows includes: indicating, based on the service requirement information of the plurality of uplink data flows, a data transmission client to control transmission rates of the plurality of uplink data flows; or respectively indicating, based on the service requirement information of the plurality of uplink data flows, application clients that send the plurality of uplink data flows to perform congestion control on the plurality of uplink data flows.

In some embodiments, indicating, based on the service requirement information of the plurality of uplink data flows, the data transmission client to control the transmission rates of the plurality of uplink data flows includes: determining a target transmission rate of each uplink data flow based on priorities of the plurality of uplink data flows; and sending a target transmission rate of the third data flow to a first data transmission client, to indicate the first data transmission client to control transmission of the third data flow based on the target transmission rate of the third data flow, where the third data flow is an uplink data flow sent by a first application client to a first application server, and the first data transmission client and the first application client are deployed in a first client device.

In some embodiments, indicating, based on the service requirement information of the plurality of uplink data flows, the data transmission client to control the transmission rates of the plurality of uplink data flows includes: determining a target transmission rate of each uplink data flow based on at least one of QoS requirement information, service types, and user types of the plurality of uplink data flows; and sending a target transmission rate of the third data flow to a first data transmission client, to indicate the first data transmission client to control transmission of the third data flow based on the target transmission rate of the third data flow, where the third data flow is an uplink data flow sent by a first application client to a first application server, and the first data transmission client and the first application client are deployed in a first client device.

In some embodiments, indicating, based on the service requirement information of the plurality of uplink data flows, the data transmission client to control the transmission rates of the plurality of uplink data flows includes: determining transmission priorities of the plurality of uplink data flows based on at least one of QoS requirement information, service types, and user types of the plurality of uplink data flows; determining a target transmission rate of each uplink data flow based on the transmission priorities of the plurality of uplink data flows; and sending a target transmission rate of the third data flow to a first data transmission client, to indicate the first data transmission client to control transmission of the third data flow based on the target transmission rate of the third data flow, where the third data flow is an uplink data flow sent by a first application client to a first application server, and the first data transmission client and the first application client are deployed in a first client device.

In some embodiments, respectively indicating, based on the service requirement information of the plurality of uplink data flows, the application clients that send the plurality of uplink data flows to perform congestion control on the plurality of uplink data flows includes: determining the target transmission rate of each uplink data flow based on the service requirement information of the plurality of uplink data flows; and sending the target transmission rate of the third data flow to the first application client that sends the third data flow, to indicate the first application client to control transmission of the third data flow based on the target transmission rate of the third data flow.

In some embodiments, respectively indicating, based on the service requirement information of the plurality of uplink data flows, the application clients that send the plurality of uplink data flows to perform congestion control on the plurality of uplink data flows includes: determining a target encoding format or a target rendering manner of each uplink data flow based on the service requirement information of the plurality of uplink data flows; and sending a target encoding format or a target rendering manner of the third data flow to the first application client that sends the third data flow, to indicate the first application client to output the third data flow based on the target encoding format or the target rendering manner of the third data flow.

In some embodiments, respectively indicating, based on the service requirement information of the plurality of uplink data flows, the application clients that send the plurality of uplink data flows to perform congestion control on the plurality of uplink data flows includes: determining congestion information of each uplink data flow based on the service requirement information of the plurality of uplink data flows, where congestion information of the third data flow indicates a network congestion degree in the transmission process of the third data flow; and sending the congestion information of the third data flow to the first application client that sends the third data flow, to indicate the first application client to perform congestion control on the third data flow based on the congestion information of the third data flow.

In some embodiments, before determining that the network congestion exists in the transmission processes of the plurality of uplink data flows, the method further includes: receiving one or more of a service type of a first application, user types of a plurality of users of the first application, QoS requirement information of the first application, and a priority of an uplink data flow belonging to the first application that are sent by the first application server, where the first application server is an application server that receives the third data flow, and the first application is an application to which the third data flow belongs.

In some embodiments, the method further includes: sending a third message to a network side device, where the third message indicates the network side device to perform network congestion detection on the uplink data flow belonging to the first application and add a congestion marker.

According to a fourth aspect, in this application, another congestion control method is proposed. The method is applied to a data transmission client, the data transmission client is deployed in a client device, and the method includes: determining that network congestion exists in transmission processes of a plurality of uplink data flows, where the plurality of uplink data flows include at least two uplink data flows belonging to different applications; and performing congestion control on the plurality of uplink data flows based on respective service requirement information of the plurality of uplink data flows, where service requirement information of a third data flow includes at least one of QoS requirement information of an application to which the third data flow belongs, a service type, and a priority, and the third data flow is any one of the plurality of uplink data flows.

In some embodiments, determining that the network congestion exists in the transmission processes of the plurality of uplink data flows includes: receiving congestion feedback information that is for the third data flow and that is sent by a data transmission serving end, where the third data flow is an uplink data flow sent by a first application client to a first application server, and the first application client is deployed in the client device; and determining, based on the congestion feedback information, that the network congestion exists in a transmission process of the third data flow.

In some embodiments, performing congestion control on the plurality of uplink data flows based on the respective service requirement information of the plurality of uplink data flows includes: controlling transmission rates of the plurality of uplink data flows based on the service requirement information of the plurality of uplink data flows; or respectively indicating, based on the service requirement information of the plurality of uplink data flows, application clients that send the plurality of uplink data flows to perform congestion control on the plurality of uplink data flows.

In some embodiments, controlling the transmission rates of the plurality of uplink data flows based on the service requirement information of the plurality of uplink data flows includes: determining a target transmission rate of each uplink data flow based on priorities of the plurality of uplink data flows; and controlling transmission of each uplink data flow based on the target transmission rate of each uplink data flow.

In some embodiments, controlling the transmission rates of the plurality of uplink data flows based on the service requirement information of the plurality of uplink data flows includes: determining a target transmission rate of each uplink data flow based on at least one of QoS requirement information and service types of the plurality of uplink data flows; and controlling transmission of each uplink data flow based on the target transmission rate of each uplink data flow.

In some embodiments, controlling the transmission rates of the plurality of uplink data flows based on the service requirement information of the plurality of uplink data flows includes: determining transmission priorities of the plurality of uplink data flows based on at least one of QoS requirement information and service types of the plurality of uplink data flows; determining a target transmission rate of each uplink data flow based on the transmission priorities of the plurality of uplink data flows; and controlling transmission of each uplink data flow based on the target transmission rate of each uplink data flow.

In some embodiments, respectively indicating, based on the service requirement information of the plurality of uplink data flows, the application clients that send the plurality of uplink data flows to perform congestion control on the plurality of uplink data flows includes: determining the target transmission rate of each uplink data flow based on the service requirement information of the plurality of uplink data flows; and sending the target transmission rate of the third data flow to the first application client that sends the third data flow, to indicate the first application client to control transmission of the third data flow based on the target transmission rate of the third data flow.

In some embodiments, respectively indicating, based on the service requirement information of the plurality of uplink data flows, the application clients that send the plurality of uplink data flows to perform congestion control on the plurality of uplink data flows includes: determining a target encoding format or a target rendering manner of each uplink data flow based on the service requirement information of the plurality of uplink data flows; and sending a target encoding format or a target rendering manner of the third data flow to the first application client that sends the third data flow, to indicate the first application client to output the third data flow based on the target encoding format or the target rendering manner of the third data flow.

In some embodiments, respectively indicating, based on the service requirement information of the plurality of uplink data flows, application clients that send the plurality of uplink data flows to perform congestion control on the plurality of uplink data flows includes:
determining congestion information of each uplink data flow based on the service requirement information of the plurality of uplink data flows, where congestion information of the third data flow indicates a network congestion degree in the transmission process of the third data flow; and
sending the congestion information of the third data flow to the first application client that sends the third data flow, to indicate the first application client to perform congestion control on the third data flow based on the congestion information of the third data flow.

In some embodiments, before determining that the network congestion exists in the transmission processes of the plurality of uplink data flows, the method further includes:
receiving one or more of a service type of a first application, QoS requirement information of the first application, and a priority of an uplink data flow belonging to the first application that are sent by the first application client, where the first application is an application to which the third data flow belongs, and the first application client is an application client that sends the third data flow.

In some embodiments, before determining that the network congestion exists in the transmission processes of the plurality of uplink data flows, the method further includes:
receiving one or more of service types of applications to which the plurality of uplink data flows respectively belong, QoS requirement information, and priorities of the plurality of uplink data flows that are sent by the data transmission serving end, where the data transmission serving end is connected to application servers that receive the plurality of uplink data flows.

According to a fifth aspect, in this application, a congestion control apparatus is proposed. The apparatus is used in a data transmission serving end, or the apparatus is the data transmission serving end, the data transmission serving end is connected to a plurality of application servers, and the apparatus includes:
a congestion identification unit, configured to determine that network congestion exists in transmission processes of a plurality of downlink data flows, where the plurality of downlink data flows include at least two downlink data flows from different application servers or include at least two downlink data flows belonging to different users; and
a congestion control unit, configured to perform congestion control on the plurality of downlink data flows based on respective service requirement information of the plurality of downlink data flows, where the service requirement information of a first data flow includes at least one of QoS requirement information of an application to which the first data flow belongs, a service type, a user type of a user to which the first data flow belongs, and a priority, and the first data flow is any one of the plurality of downlink data flows.

In some embodiments, the apparatus further includes a communication unit; and when determining that the network congestion exists in the transmission processes of the plurality of downlink data flows, the congestion identification unit is specifically configured to:
receive, by using the communication unit, congestion feedback information that is for the first data flow and that is sent by a first data transmission client, where the first data flow is a downlink data flow sent by a first application server to a first application client, the first application client is any one of a plurality of application clients of the first application server, and the first data transmission client and the first application client are deployed in a first client device; and
determine, based on the congestion feedback information, that the network congestion exists in a transmission process of the first data flow.

In some embodiments, the congestion control unit is specifically configured to:
control transmission rates of the plurality of downlink data flows based on the service requirement information of the plurality of downlink data flows; or respectively indicate, based on the service requirement information of the plurality of downlink data flows, the application servers that send the plurality of downlink data flows to perform congestion control on the plurality of downlink data flows.

In some embodiments, the congestion control unit is specifically configured to:
determine a target transmission rate of each downlink data flow based on priorities of the plurality of downlink data flows; and
control transmission of each downlink data flow based on the target transmission rate of each downlink data flow.

In some embodiments, the congestion control unit is specifically configured to:
determine a target transmission rate of each downlink data flow based on one or more of QoS requirement information, service types, and user types of the plurality of downlink data flows; and
control transmission of each downlink data flow based on the target transmission rate of each downlink data flow.

In some embodiments, the congestion control unit is specifically configured to:
determine transmission priorities of the plurality of downlink data flows based on one or more of QoS requirement information, service types, and user types of the plurality of downlink data flows;
determine a target transmission rate of each downlink data flow based on the transmission priorities of the plurality of downlink data flows; and
control transmission of each downlink data flow based on the target transmission rate of each downlink data flow.

In some embodiments, the apparatus further includes a communication unit, and when respectively indicating, based on the service requirement information of the plurality of downlink data flows, the application servers that send the plurality of downlink data flows to perform congestion control on the plurality of downlink data flows, the congestion control unit is specifically configured to:
determine a target transmission rate of each downlink data flow based on the service requirement information of the plurality of downlink data flows; and
indicate the communication unit to send a target transmission rate of the first data flow to the first application server that sends the first data flow, to indicate the first application server to control transmission of the first data flow based on the target transmission rate of the first data flow.

In some embodiments, the apparatus further includes a communication unit, and when respectively indicating, based on the service requirement information of the plurality of downlink data flows, the application servers that send the plurality of downlink data flows to perform congestion control on the plurality of downlink data flows, the congestion control unit is specifically configured to:
determine a target encoding format or a target rendering manner of each downlink data flow based on the service requirement information of the plurality of downlink data flows; and
indicate the communication unit to send a target encoding format or a target rendering manner of the first data flow to the first application server that sends the first data flow, to indicate the first application server to output the first data flow based on the target encoding format or the target rendering manner of the first data flow.

In some embodiments, the apparatus further includes a communication unit, and when respectively indicating, based on the service requirement information of the plurality of downlink data flows, the application servers that send the plurality of downlink data flows to perform congestion control on the plurality of downlink data flows, the congestion control unit is specifically configured to:
determine congestion information of each downlink data flow based on the service requirement information of the plurality of downlink data flows, where congestion information of the first data flow indicates a network congestion degree in the transmission process of the first data flow; and
indicate the communication unit to send the congestion information of the first data flow to the first application server that sends the first data flow, to indicate the first application server to perform congestion control on the first data flow based on the congestion information of the first data flow.

In some embodiments, the apparatus further includes the communication unit, configured to:
receive one or more of a service type of a first application, user types of a plurality of users of the first application, QoS requirement information of the first application, and a priority of a downlink data flow belonging to the first application that are sent by the first application server, where the first application server is an application server that sends the first data flow, and the first application is an application to which the first data flow belongs.

In some embodiments, the communication unit is further configured to:
send a first message to a network side device, where the first message indicates the network side device to perform network congestion detection on the downlink data flow belonging to the first application and add a congestion marker.

In some embodiments, the communication unit is further configured to:
send a second message to the first data transmission client, where the first data transmission client is deployed in the first client device, the first client device is any one of a plurality of client devices of the first application server, and the second message indicates the first data transmission client to perform congestion marker identification on a received downlink data flow belonging to the first application, and indicates the first data transmission client to send congestion feedback information to the data transmission serving end after identifying the congestion marker in the downlink data flow belonging to the first application.

According to a sixth aspect, in this application, another congestion control apparatus is proposed. The apparatus is used in a data transmission client, or the apparatus is the data transmission client, the data transmission client is deployed in a client device, and the apparatus includes:
a congestion identification unit, configured to determine that network congestion exists in transmission processes of a plurality of downlink data flows, where the plurality of downlink data flows include at least two downlink data flows from different application servers; and
a congestion control unit, configured to perform congestion control on the plurality of downlink data flows based on respective service requirement information of the plurality of downlink data flows, where service requirement information of a first data flow includes at least one of QoS requirement information of an application to which the first data flow belongs, a service type, and a priority, and the first data flow is any one of the plurality of downlink data flows.

In some embodiments, the apparatus further includes a communication unit, and when determining that the network congestion exists in the transmission processes of the plurality of downlink data flows, the congestion identification unit is specifically configured to:
receive the first data flow from a network side device by using the communication unit, where the first data flow includes a plurality of data packets, a packet header of at least one of the plurality of data packets includes a congestion marker, and the congestion marker indicates that the network congestion exists in a transmission process of the first data flow.

In some embodiments, the congestion control unit is specifically configured to:
indicate, based on the service requirement information of the plurality of downlink data flows, a data transmission serving end to control transmission rates of the plurality of downlink data flows; or respectively indicate, based on the service requirement information of the plurality of downlink data flows, the application servers that send the plurality of downlink data flows to perform congestion control on the plurality of downlink data flows, where
the data transmission serving end is connected to the application servers that send the plurality of downlink data flows.

In some embodiments, the apparatus further includes a communication unit; and when indicating, based on the service requirement information of the plurality of downlink data flows, the data transmission serving end to control the transmission rates of the plurality of downlink data flows, the congestion control unit is specifically configured to:
determine a target transmission rate of each downlink data flow based on priorities of the plurality of downlink data flows; and
send the target transmission rate of each downlink data flow to the data transmission serving end by using the communication unit, to indicate the data transmission serving end to control transmission of each downlink data flow based on the target transmission rate of each downlink data flow.

In some embodiments, the apparatus further includes a communication unit; and when indicating, based on the service requirement information of the plurality of downlink data flows, the data transmission serving end to control the transmission rates of the plurality of downlink data flows, the congestion control unit is specifically configured to:
determine a target transmission rate of each downlink data flow based on at least one of QoS requirement information and service types of the plurality of downlink data flows; and
send the target transmission rate of each downlink data flow to the data transmission serving end by using the communication unit, to indicate the data transmission serving end to control transmission of each downlink data flow based on the target transmission rate of each downlink data flow.

In some embodiments, the apparatus further includes a communication unit; and when indicating, based on the service requirement information of the plurality of downlink data flows, the data transmission serving end to control the transmission rates of the plurality of downlink data flows, the congestion control unit is specifically configured to:
determine transmission priorities of the plurality of downlink data flows based on at least one of QoS requirement information and service types of the plurality of downlink data flows;
determine a target transmission rate of each downlink data flow based on the transmission priorities of the plurality of downlink data flows; and
send the target transmission rate of each downlink data flow to the data transmission serving end by using the communication unit, to indicate the data transmission serving end to control transmission of each downlink data flow based on the target transmission rate of each downlink data flow.

In some embodiments, the apparatus further includes a communication unit, and when respectively indicating, based on the service requirement information of the plurality of downlink data flows, the application servers that send the plurality of downlink data flows to perform congestion control on the plurality of downlink data flows, the congestion control unit is specifically configured to:
determine a target transmission rate of each downlink data flow based on the service requirement information of the plurality of downlink data flows; and
send, by using the communication unit, a target transmission rate of the first data flow to the first application server that sends the first data flow, to indicate the first application server to control transmission of the first data flow based on the target transmission rate of the first data flow.

In some embodiments, the apparatus further includes a communication unit, and when respectively indicating, based on the service requirement information of the plurality of downlink data flows, the application servers that send the plurality of downlink data flows to perform congestion control on the plurality of downlink data flows, the congestion control unit is specifically configured to:
determine a target encoding format or a target rendering manner of each downlink data flow based on the service requirement information of the plurality of downlink data flows; and
send, by using the communication unit, a target encoding format or a target rendering manner of the first data flow to the first application server that sends the first data flow, to indicate the first application server to output the first data flow based on the target encoding format or the target rendering manner of the first data flow.

In some embodiments, the apparatus further includes a communication unit, and when respectively indicating, based on the service requirement information of the plurality of downlink data flows, the application servers that send the plurality of downlink data flows to perform congestion control on the plurality of downlink data flows, the congestion control unit is specifically configured to:
determine congestion information of each downlink data flow based on the service requirement information of the plurality of downlink data flows, where congestion information of the first data flow indicates a network congestion degree in the transmission process of the first data flow; and
send, by using the communication unit, the congestion information of the first data flow to the first application server that sends the first data flow, to indicate the first application server to perform congestion control on the first data flow based on the congestion information of the first data flow.

In some embodiments, the apparatus further includes the communication unit, configured to:
receive a second message sent by the data transmission serving end, where the second message indicates to perform congestion marker identification on a received downlink data flow belonging to a first application, and indicate to send congestion feedback information to the data transmission serving end after a congestion marker is identified in the downlink data flow belonging to the first application.

In some embodiments, the apparatus further includes the communication unit, configured to:
receive one or more of a service type of a first application, QoS requirement information of the first application, and a priority of a downlink data flow belonging to the first application that are sent by the first application client, where the first application is an application to which the first data flow belongs, and the first application client is an application client that receives the first data flow.

In some embodiments, the apparatus further includes the communication unit, configured to:
receive one or more of service types of applications to which the plurality of downlink data flows respectively belong, QoS requirement information, and priorities of the plurality of downlink data flows that are sent by the data transmission serving end, where the data transmission serving end is connected to application servers that send the plurality of downlink data flows.

According to a seventh aspect, in this application, another congestion control apparatus is proposed. The apparatus is used in a data transmission serving end, or the apparatus is used in the data transmission serving end, the data transmission serving end is connected to a plurality of application servers, and the apparatus includes:
a congestion identification unit, configured to determine that network congestion exists in transmission processes of a plurality of uplink data flows, where the plurality of uplink data flows include at least two uplink data flows belonging to different applications or include at least two uplink data flows belonging to different users; and
a congestion control unit, configured to perform congestion control on the plurality of uplink data flows based on respective service requirement information of the plurality of uplink data flows, where service requirement information of a third data flow includes at least one of QoS requirement information of an application to which the third data flow belongs, a service type, a user type of a user to which the third data flow belongs, and a priority, and the third data flow is any one of the plurality of uplink data flows.

In some embodiments, the apparatus further includes a communication unit; and when determining that the network congestion exists in the transmission processes of the plurality of uplink data flows, the congestion identification unit is specifically configured to:
receive the third data flow from a network side device by using the communication unit, where the third data flow includes a plurality of data packets, a packet header of at least one of the plurality of data packets includes a congestion marker, and the congestion marker indicates that the network congestion exists in a transmission process of the third data flow.

In some embodiments, the congestion control unit is specifically configured to:
indicate, based on the service requirement information of the plurality of uplink data flows, a data transmission client to control transmission rates of the plurality of uplink data flows; or respectively indicate, based on the service requirement information of the plurality of uplink data flows, application clients that send the plurality of uplink data flows to perform congestion control on the plurality of uplink data flows.

In some embodiments, the apparatus further includes the communication unit; and when indicating, based on the service requirement information of the plurality of uplink data flows, the data transmission client to control the transmission rates of the plurality of uplink data flows, the congestion control unit is specifically configured to:
determine a target transmission rate of each uplink data flow based on priorities of the plurality of uplink data flows; and
send a target transmission rate of the third data flow to a first data transmission client by using the communication unit, to indicate the first data transmission client to control transmission of the third data flow based on the target transmission rate of the third data flow, where the third data flow is an uplink data flow sent by a first application client to a first application server, and the first data transmission client and the first application client are deployed in a first client device.

In some embodiments, the apparatus further includes the communication unit; and when indicating, based on the service requirement information of the plurality of uplink data flows, the data transmission client to control the transmission rates of the plurality of uplink data flows, the congestion control unit is specifically configured to:
determine a target transmission rate of each uplink data flow based on at least one of QoS requirement information, service types, and user types of the plurality of uplink data flows; and
send a target transmission rate of the third data flow to a first data transmission client by using the communication unit, to indicate the first data transmission client to control transmission of the third data flow based on the target transmission rate of the third data flow, where the third data flow is an uplink data flow sent by a first application client to a first application server, and the first data transmission client and the first application client are deployed in a first client device.

In some embodiments, the apparatus further includes the communication unit; and when indicating, based on the service requirement information of the plurality of uplink data flows, the data transmission client to control the transmission rates of the plurality of uplink data flows, the congestion control unit is specifically configured to:
determine transmission priorities of the plurality of uplink data flows based on at least one of QoS requirement information, service types, and user types of the plurality of uplink data flows;
determine a target transmission rate of each uplink data flow based on the transmission priorities of the plurality of uplink data flows; and
send, by using the communication unit, a target transmission rate of the third data flow to a first data transmission client, to indicate the first data transmission client to control transmission of the third data flow based on the target transmission rate of the third data flow, where the third data flow is an uplink data flow sent by a first application client to a first application server, and the first data transmission client and the first application client are deployed in a first client device.

In some embodiments, the apparatus further includes the communication unit, and when respectively indicating, based on the service requirement information of the plurality of uplink data flows, the application clients that send the plurality of uplink data flows to perform congestion control on the plurality of uplink data flows, the congestion control unit is specifically configured to:
determine a target transmission rate of each uplink data flow based on the service requirement information of the plurality of uplink data flows; and
send, by using the communication unit, the target transmission rate of the third data flow to the first application client that sends the third data flow, to indicate the first application client to control transmission of the third data flow based on the target transmission rate of the third data flow.

In some embodiments, the apparatus further includes the communication unit, and when respectively indicating, based on the service requirement information of the plurality of uplink data flows, the application clients that send the plurality of uplink data flows to perform congestion control on the plurality of uplink data flows, the congestion control unit is specifically configured to:
determine a target encoding format or a target rendering manner of each uplink data flow based on the service requirement information of the plurality of uplink data flows; and
send, by using the communication unit, a target encoding format or a target rendering manner of the third data flow to the first application client that sends the third data flow, to indicate the first application client to output the third data flow based on the target encoding format or the target rendering manner of the third data flow.

In some embodiments, the apparatus further includes the communication unit, and when respectively indicating, based on the service requirement information of the plurality of uplink data flows, the application clients that send the plurality of uplink data flows to perform congestion control on the plurality of uplink data flows, the congestion control unit is specifically configured to:
determine congestion information of each uplink data flow based on the service requirement information of the plurality of uplink data flows, where congestion information of the third data flow indicates a network congestion degree in the transmission process of the third data flow; and
send, by using the communication unit, the congestion information of the third data flow to the first application client that sends the third data flow, to indicate the first application client to perform congestion control on the third data flow based on the congestion information of the third data flow.

In some embodiments, the apparatus further includes the communication unit, configured to:
receive one or more of a service type of a first application, user types of a plurality of users of the first application, QoS requirement information of the first application, and a priority of an uplink data flow belonging to the first application that are sent by the first application server, where the first application server is an application server that receives the third data flow, and the first application is an application to which the third data flow belongs.

In some embodiments, the communication unit is further configured to:
send a third message to a network side device, where the third message indicates the network side device to perform network congestion detection on the uplink data flow belonging to the first application and add a congestion marker.

According to an eighth aspect, in this application, another congestion control apparatus is proposed. The apparatus is used in a data transmission client, or the apparatus is the data transmission client, the data transmission client is deployed in a client device, and the apparatus includes:
a congestion identification unit, configured to determine that network congestion exists in transmission processes of a plurality of uplink data flows, where the plurality of uplink data flows include at least two uplink data flows belonging to different applications; and
a congestion control unit, configured to perform congestion control on the plurality of uplink data flows based on respective service requirement information of the plurality of uplink data flows, where service requirement information of a third data flow includes at least one of QoS requirement information of an application to which the third data flow belongs, a service type, and a priority, and the third data flow is any one of the plurality of uplink data flows.

In some embodiments, the apparatus further includes a communication unit, and when determining that the network congestion exists in the transmission processes of the plurality of uplink data flows, the congestion identification unit is specifically configured to:
receive, by using the communication unit, congestion feedback information that is for the third data flow and that is sent by a data transmission serving end, where the third data flow is an uplink data flow sent by a first application client to a first application server, and the first application client is deployed in the client device; and
determine, based on the congestion feedback information, that the network congestion exists in a transmission process of the third data flow.

In some embodiments, the congestion control unit is specifically configured to:
control transmission rates of the plurality of uplink data flows based on the service requirement information of the plurality of uplink data flows; or indicate, based on the service requirement information of the plurality of uplink data flows, application clients that send the plurality of uplink data flows to perform congestion control on the plurality of uplink data flows.

In some embodiments, when controlling the transmission rates of the plurality of uplink data flows based on the service requirement information of the plurality of uplink data flows, the congestion control unit is specifically configured to:
determine a target transmission rate of each uplink data flow based on priorities of the plurality of uplink data flows; and
control transmission of each uplink data flow based on the target transmission rate of each uplink data flow.

In some embodiments, when controlling the transmission rates of the plurality of uplink data flows based on the service requirement information of the plurality of uplink data flows, the congestion control unit is specifically configured to:
determine a target transmission rate of each uplink data flow based on at least one of QoS requirement information and service types of the plurality of uplink data flows; and
control transmission of each uplink data flow based on the target transmission rate of each uplink data flow.

In some embodiments, when controlling the transmission rates of the plurality of uplink data flows based on the service requirement information of the plurality of uplink data flows, the congestion control unit is specifically configured to:
determine transmission priorities of the plurality of uplink data flows based on at least one of QoS requirement information and service types of the plurality of uplink data flows;
determine a target transmission rate of each uplink data flow based on the transmission priorities of the plurality of uplink data flows; and
control transmission of each uplink data flow based on the target transmission rate of each uplink data flow.

In some embodiments, the apparatus further includes the communication unit; and when respectively indicating, based on the service requirement information of the plurality of uplink data flows, the application clients that send the plurality of uplink data flows to perform congestion control on the plurality of uplink data flows, the congestion control unit is specifically configured to:
determine a target transmission rate of each uplink data flow based on the service requirement information of the plurality of uplink data flows; and
send, by using the communication unit, the target transmission rate of the third data flow to the first application client that sends the third data flow, to indicate the first application client to control transmission of the third data flow based on the target transmission rate of the third data flow.

In some embodiments, the apparatus further includes the communication unit; and when respectively indicating, based on the service requirement information of the plurality of uplink data flows, the application clients that send the plurality of uplink data flows to perform congestion control on the plurality of uplink data flows, the congestion control unit is specifically configured to:
determine a target encoding format or a target rendering manner of each uplink data flow based on the service requirement information of the plurality of uplink data flows; and
send, by using the communication unit, a target encoding format or a target rendering manner of the third data flow to the first application client that sends the third data flow, to indicate the first application client to output the third data flow based on the target encoding format or the target rendering manner of the third data flow.

In some embodiments, the apparatus further includes the communication unit; and when respectively indicating, based on the service requirement information of the plurality of uplink data flows, the application clients that send the plurality of uplink data flows to perform congestion control on the plurality of uplink data flows, the congestion control unit is specifically configured to:
determine congestion information of each uplink data flow based on the service requirement information of the plurality of uplink data flows, where congestion information of the third data flow indicates a network congestion degree in the transmission process of the third data flow; and
send, by using the communication unit, the congestion information of the third data flow to the first application client that sends the third data flow, to indicate the first application client to perform congestion control on the third data flow based on the congestion information of the third data flow.

In some embodiments, the apparatus further includes the communication unit, configured to:
receive one or more of a service type of a first application, QoS requirement information of the first application, and a priority of an uplink data flow belonging to the first application that are sent by the first application client, where the first application is an application to which the third data flow belongs, and the first application client is an application client that sends the third data flow.

In some embodiments, the apparatus further includes the communication unit, configured to:
receive one or more of service types of applications to which the plurality of uplink data flows respectively belong, QoS requirement information, and priorities of the plurality of uplink data flows that are sent by the data transmission serving end, where the data transmission serving end is connected to application servers that receive the plurality of uplink data flows.

According to a ninth aspect, in this application, another congestion control apparatus is proposed, including a processor and a memory. The memory is configured to store a program. The processor is configured to execute the program stored in the memory, to enable the apparatus to implement the method according to any one of the possible designs of the first aspect to the fourth aspect.

According to a tenth aspect, embodiments of this application provide a computer-readable storage medium. The computer-readable storage medium stores program code. When the program code runs on a computer, the computer is enabled to perform the method according to any one of the possible designs of the first aspect to the fourth aspect.

According to an eleventh aspect, embodiments of this application provide a computer program product. When the computer program product runs on a computer, the computer is enabled to perform the method according to any one of the possible designs of the first aspect to the fourth aspect.

According to a twelfth aspect, embodiments of this application provide a chip system. The chip system includes a processor. The processor is coupled to a memory, and is configured to invoke a computer program or computer instructions stored in the memory, to enable the processor to perform the method according to the possible designs of the first aspect to the fourth aspect.

According to a thirteenth aspect, embodiments of this application provide a processor. The processor is configured to invoke a computer program or computer instructions stored in a memory, to enable the processor to perform the method according to the possible designs of the first aspect to the fourth aspect.

Based on the implementations provided in the foregoing aspects, embodiments of this application may be further combined to provide more implementations. For technical effects that can be achieved by any one of the possible designs of the second aspect to the thirteenth aspect, refer to descriptions of the technical effects that can be achieved by any one of the possible designs of the first aspect. Repeated parts are not described.

### BRIEF DESCRIPTION OF DRAWINGS

FIG. 1 is a diagram of a network architecture;
FIG. 2 is a diagram of a SEALDD service architecture;
FIG. 3 is a diagram of a SEALDD-based data transmission process;
FIG. 4 is a diagram of an implementation process of an L4S congestion control solution according to an embodiment of this application;
FIG. 5 is a diagram of an architecture of a downlink data transmission scenario according to an embodiment of this application;
FIG. 6 is a schematic flowchart of a congestion control method according to an embodiment of this application;
FIG. 7A and FIG. 7B are a schematic flowchart of a congestion control method in a downlink data transmission scenario according to an embodiment of this application;
FIG. 8A and FIG. 8B are a schematic flowchart of a congestion control method in another downlink data transmission scenario according to an embodiment of this application;
FIG. 9A and FIG. 9B are a schematic flowchart of a congestion control method in another downlink data transmission scenario according to an embodiment of this application;
FIG. 10 is a diagram of an architecture of an uplink data transmission scenario according to an embodiment of this application;
FIG. 11 is a schematic flowchart of another congestion control method according to an embodiment of this application;
FIG. 12A and FIG. 12B are a schematic flowchart of a congestion control method in an uplink data transmission scenario according to an embodiment of this application;
FIG. 13A and FIG. 13B are a schematic flowchart of a congestion control method in another uplink data transmission scenario according to an embodiment of this application;
FIG. 14A and FIG. 14B are a schematic flowchart of a congestion control method in another uplink data transmission scenario according to an embodiment of this application;
FIG. 15 is a diagram of a structure of a congestion control apparatus according to an embodiment of this application; and
FIG. 16 is a diagram of a structure of another congestion control apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings. The terms "first" and "second" below in the description of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

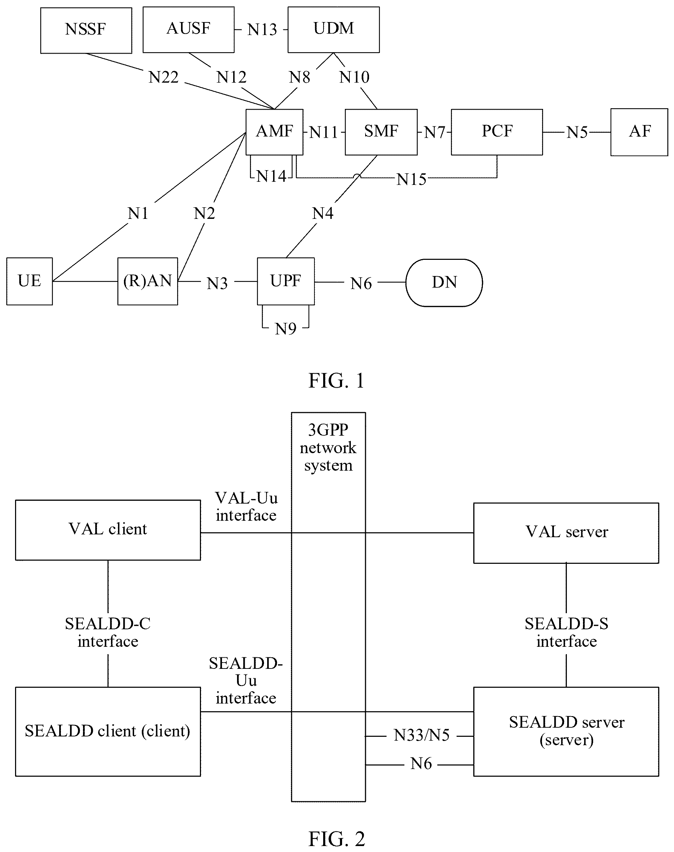

For ease of understanding, examples of descriptions of some concepts related to embodiments of this application are described for reference.
(1) Service and system aspects (service and system aspects, SA2) 5G architecture: 3GPP SA2 defines a 5G system architecture that is divided into two parts: an access network and a core network. For a diagram of a specific network architecture, refer to FIG. 1. As shown in FIG. 1, key logical network elements of the core network part include an access and mobility management function (access and mobility management function, AMF) network element, a session management function (session management function, SMF) network element, a user plane function (user plane function, UPF) network element, a policy control function (policy control function, PCF) network element, and a unified data management (unified data management, UDM) network element. The following describes each component unit included in the system architecture shown in FIG. 1.

User equipment (user equipment, UE), also referred to as a terminal device, a mobile station (mobile station, MS), a mobile terminal (mobile terminal, MT), or the like, is a device that provides voice and/or data connectivity for a user. For example, the terminal device may include a handheld device, a vehicle-mounted device, or the like that has a wireless connection function. Currently, the terminal device may be a device-to-device (device-to-device, D2D) terminal device, a vehicle-to-everything (vehicle-to-everything, V2X) terminal device (where the V2X may specifically include vehicle-to-vehicle (vehicle-to-vehicle, V2V), vehicle-to-infrastructure (vehicle-to-infrastructure, V2I), and vehicle-to-pedestrian (vehicle-to-pedestrian, V2P) direct communication, vehicle-to-network (vehicle-to-network, V2N) communication interaction, and other application requirements), a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal device (remote terminal), an access terminal device (access terminal), a user terminal device (user terminal), a user agent (user agent), or a user device (user device). For example, the terminal device may include a mobile phone (or referred to as a "cellular" phone), a computer having a mobile terminal device, or a portable, pocket-sized, handheld, or a computer-embedded mobile apparatus. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively be a tablet computer or a computer with a wireless transceiver function. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner. By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

A radio access network (radio access network, RAN) device (for example, a base station) may be a device that communicates with a wireless terminal device over an air interface in an access network by using one or more cells. For example, the access network device may include an evolved NodeB (NodeB, eNB, or e-NodeB, evolved NodeB) in an LTE system or a long term evolution-advanced (long term evolution-advanced, LTE-A) system, or may include a next generation NodeB (next generation NodeB, gNB) in a 5G NR system, or may include a central unit (central unit, CU) and a distributed unit (distributed unit, DU) in a cloud radio access network (cloud radio access network, Cloud RAN) system. This is not limited in embodiments of this application. The eNB may include a macro base station, a micro base station (also referred to as a small cell), a relay station, an access point, a wearable device, and a vehicle-mounted device in various forms. The eNB may alternatively be a transmission and reception point (Transmission and Reception Point, TRP). The gNB may include a macro base station, a micro base station (also referred to as a small cell), a relay station, an access point, a wearable device, and a vehicle-mounted device in various forms. The gNB may alternatively be a TRP or a transmission measurement function (Transmission measurement function, TMF). The gNB may include a CU and a DU that are integrated into the gNB. The terminal device may communicate with a serving base station through a Uu link. For example, the terminal device may communicate with an Ng-eNB through an LTE-Uu link, and may communicate with the gNB through an NR-Uu link. The Ng-eNB is an LTE base station, and the gNB is an NR base station. Base stations may communicate with each other through an Xn interface.

The UPF network element is responsible for processing user packets, such as forwarding and performing charging on the packets.

The AMF network element is responsible for mobility management in a mobile network, such as user location update, user network registration, and user switching.

The SMF network element is responsible for session management in a mobile network, for example, session establishment, modification, and release. In a session establishment process, the SMF network element specifically performs operations such as allocating an IP address to the user, and selecting a UPF that provides a packet forwarding function.

The PCF network element is responsible for providing a packet processing policy for the AMF network element and the SMF network element, for example, including a QoS policy and a slice selection policy.

The UDM network element is configured to store user data, for example, may include user subscription information, authorization and authentication information, and the like.

A network slice selection function (network slice selection function, NSSF) network element is configured to determine, based on slice selection assistance information, subscription information, and the like of the UE, a network slice instance that the UE is allowed to access.

An authentication server function (authentication server function, AUSF) network element is responsible for 3GPP and non-3GPP access authentication.

An application function (application function, AF) network element is responsible for providing a service to the 3GPP, for example, affecting service routing and interacting with the PCF network element to perform policy control.

A data network (data network, DN) is an operator network that provides a data transmission service for the user, for example, an IP multi-media service (IP multi-media service, IMS) or the internet. The UE accesses the DN by establishing sessions among UE-RAN-UPF-DN.

(2) SA6 SEALDD architecture: 3GPP SA6 proposes an architecture and a function of a service enabler architecture layer data delivery (service enabler architecture layer data delivery, SEALDD) service, to provide functions related to data transmission, data distribution, and data storage for a vertical application layer (vertical application layer, VAL), and provide a communication transmission function for the VAL in a form of an application programming interface (application programming interface, API) through an interface (which may be referred to as a northbound interface) with the VAL. For example, the SEALDD may also be referred to as a data transmission enhancement layer or a SEALDD enhancement layer. FIG. 2 is a diagram of an architecture of a SEALDD system according to an embodiment of this application. The SEALDD system includes a SEALDD client (SEALDD client) and a SEALDD serving end (SEALDD server). The SEALDD client is deployed in UE in a form of software or a system component, and the SEALDD serving end is deployed between a UPF network element and an application server (application server, AS) or a VAL server (VAL server) in a form of a server or a server cluster. Alternatively, the SEALDD serving end may be deployed in a distributed manner based on deployment statuses of the UPF and the AS.

As shown in FIG. 2, the SEALDD client communicates with a VAL client through a SEALDD-C interface, and the SEALDD serving end communicates with the VAL server through a SEALDD-S interface. User plane data transmission is performed between the SEALDD client and the SEALDD serving end through a SEALDD-Uu interface, where the SEALDD-Uu interface is carried on a user plane session established by a 3GPP network system. When SEALDD serving ends are deployed in a distributed manner in a server cluster manner, the SEALDD serving ends interact with each other through a SEALDD-E interface, for example, provide control plane context transmission and user plane data forwarding. When interacting with a core network, on the one hand, the SEALDD serving end may serve as an AF network element to interact with a PCF network element through an N5 interface, or may serve as an AF network element to interact with a network exposure function (network exposure function, NEF) network element through an N33 interface, to further indirectly communicate with the PCF network element through the NEF network element; and on the other hand, may perform user plane data transmission with the UPF network element through an N6 interface.

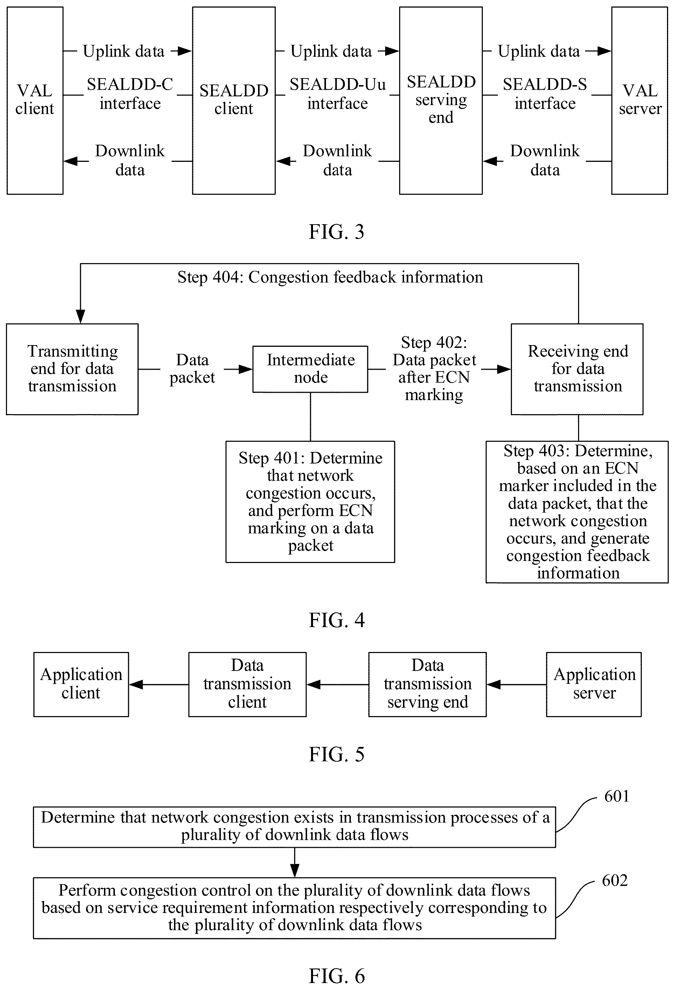

Based on the architecture shown in FIG. 2, the following describes a process in which the SEALDD provides a data transmission service for a VAL application. For example, FIG. 3 is a diagram of a SEALDD-based data transmission process according to an embodiment of this application. In an uplink data transmission process, a VAL client transmits an uplink data packet to a SEALDD client through a SEALDD-C interface. After performing data packet encapsulation, the SEALDD client sends an encapsulated uplink data packet to a SEALDD server through a SEALDD-Uu interface. After parsing and decapsulating the uplink data packet, the SEALDD serving end sends the uplink data packet to the VAL server through a SEALDD-S interface. In a downlink data transmission process, a VAL server sends a downlink data packet to a SEALDD serving end through a SEALDD-S interface. The SEALDD serving end encapsulates the downlink data packet and sends the encapsulated downlink data packet to a SEALDD client through a SEALDD-Uu interface. The SEALDD client parses and decapsulates the received downlink data packet and transmits the decapsulated downlink data packet to a VAL client through a SEALDD-C interface.

When a single transmitting end or a plurality of transmitting ends simultaneously send a large amount of data to one receiving end, if a total bandwidth of data transmission exceeds a bandwidth capability of a data transmission link or a processing capability of a transmission node, network congestion occurs. Consequently, network performance deteriorates, and user experience deteriorates. For example, the network congestion may cause problems such as packet accumulation and a packet queuing delay increase. When the packet accumulation exceeds a buffer capacity or a buffer threshold of the transmission node, the following processing is further caused: The transmission node discards a packet, and a sending node retransmits a packet. Consequently, network transmission performance deteriorates, and even phenomena such as network crashes occur. Therefore, when the network congestion occurs, congestion control is critical to improving network performance and satisfying user and application experience. Congestion control refers to an objective of reducing a network congestion degree or resolving the network congestion by adjusting a quantity of data packets injected by the transmitting end into a network. Conventional congestion control solutions include a transmission control protocol (transmission control protocol, TCP) congestion control solution and a low latency low loss scalable (low latency low loss scalable throughput, L4S) network congestion control solution proposed by the internet engineering task force (internet engineering task force, IETF). In the TCP congestion control solution, a slow start and a congestion avoidance algorithm are used. When network congestion occurs, packets are discarded to adjust a window size of a data transmitting end, to reduce network congestion. This manner has problems such as a waste of network resources. A principle of the L4S congestion control solution is that when determining that network congestion occurs, an intermediate node for data transmission sets an explicit congestion notification (explicit congestion notification, ECN) marker bit in a packet header of a data packet to "11" or fills the marker bit with "11". This process may be referred to as ECN marking. Further, a receiving end for data transmission may learn that the network congestion occurs, and notify the transmitting end for data transmission of the occurrence, so that the transmitting end performs congestion control. For example, FIG. 4 is a diagram of an implementation process of an L4S congestion control solution according to an embodiment of this application. Step 401: An intermediate node determines that network congestion occurs, and performs ECN marking on a data packet. For example, the intermediate node may determine, when buffer exceeds a threshold, that the network congestion occurs, parse an IP header of a data packet, and set an ECN marker bit included in the header to "11". Step 402: The intermediate node sends the data packet after the ECN marking is performed to a receiving end for data transmission. Step 403: The receiving end for data transmission determines, based on an ECN marker included in the data packet, that network congestion occurs, and generates congestion feedback information. For example, the receiving end may generate congestion feedback information, for example, a TCP echo (echo) message, by using an ECN feedback mechanism. Step 404: The receiving end for data transmission sends the congestion feedback information to the transmitting end for data transmission. After receiving the congestion feedback information, the transmitting end for data transmission may perform congestion control, for example, may reduce a size of the data packet, or reduce a transmission rate of the data packet, to alleviate the network congestion.

Based on the foregoing description, it can be learned that the conventional IETF L4S congestion control solution has some disadvantages: There is a specific function requirement for the transmitting end and the receiving end for data transmission, to be specific, the receiving end needs to support ECN marker bit identification and generation and sending of the congestion feedback information, and the transmitting end needs to support a function of processing the congestion feedback information. Consequently, calculation load of the receiving end and the transmitting end increases. In addition, during congestion control, the transmitting end can adjust a transmission rate of only a single data flow, and cannot learn an actual running status of an entire network or another application. For example, a first data flow sent by a first transmitting end has a high requirement on real-time performance, and a second data flow sent by a second transmitting end has a low requirement on real-time performance. In this case, a transmission rate of the second data flow may be reduced by a lower level than that of the first data flow. However, because the first transmitting end and the second transmitting end can perform adjustment only from a perspective of the first transmitting end and the second transmitting end, a problem such as that the transmission rate of the first data flow and the transmission rate of the second data flow are decreased to a same extent or that the transmission rate is not adjusted is caused. Consequently, a congestion control effect is poor. This application provides a congestion control solution. A data transmission serving end connected to a plurality of application servers performs congestion control, and the data transmission serving end may perform congestion control on a data flow based on at least one of service types of a plurality of applications, QoS requirement information, user types, and priorities of data flows belonging to different applications. Compared with the conventional L4S congestion control solution, the solution of this application is executed by the data transmission serving end. The data transmission serving end may respectively perform different congestion control on different data flows with reference to service requirement degrees, for example, QoS requirements and service type differences, of a plurality of data flows, so that a congestion control effect is better. In addition, because an execution body is the data transmission serving end, functions such as congestion marker identification and congestion feedback do not need to be configured for clients and servers of the applications, thereby reducing application development difficulty.

For ease of understanding of the solution of this application, a scenario to which the solution of this application is applicable is first described. FIG. 5 is a diagram of an architecture of a downlink data transmission scenario according to an embodiment of this application. The downlink data transmission scenario includes an application client, an application server, a data transmission client, and a data transmission serving end. The application client may be a VAL application client, and the application serving end may be a VAL application serving end. For example, the application client may be deployed in a terminal device (or may be referred to as a client device) in a form of software. For a description of the terminal device, refer to related descriptions in FIG. 1. Details are not described herein again. The application serving end may be implemented in a form of an independent server or a server cluster, and is configured to respond to a request of the application client. For ease of description, the application serving end is referred to as an application server subsequently. The data transmission client may be the SEALDD client described in the foregoing embodiments, or may be referred to as a media enabling client, a data transmission enhancement client, or the like, and is deployed in the terminal device in a form of software or a system component. The data transmission serving end may be the SEALDD serving end described in the foregoing embodiments, or may be referred to as a media enabling server, a data transmission enhancement server, or the like, and is deployed between the application server and a network in a form of an independent server or a server cluster. The network in the scenario shown in FIG. 5 includes an access network and a core network. For descriptions of the access network and the core network, refer to related descriptions in FIG. 1 in the above. Details are not described herein again. For example, FIG. 5 is merely an example. A quantity of application servers is not limited in this application. For example, the data transmission serving end may be connected to a plurality of application servers, and each application server supports a different application. Correspondingly, a quantity of application clients and a quantity of data transmission clients are not limited in this application. The following describes the congestion control solution provided in this application with reference to the downlink data transmission scenario shown in FIG. 5.

For example, FIG. 6 is a schematic flowchart of a congestion control method according to an embodiment of this application. Optionally, the method procedure shown in FIG. 6 may be implemented by the data transmission serving end included in the scenario shown in FIG. 5, or may be implemented by a specific component included in the data transmission serving end, for example, may be implemented by an apparatus such as a chip or a processor included in the data transmission serving end. The data transmission serving end is connected to a plurality of application servers, and is configured to provide a data transmission service for the plurality of application servers. The method procedure shown in FIG. 6 specifically includes the following steps.

601: Determine that network congestion exists in transmission processes of a plurality of downlink data flows.

The plurality of downlink data flows include at least a first data flow and a second data flow, the first data flow and the second data flow are any two different downlink data flows in the plurality of downlink data flows, and the first data flow and the second data flow belong to different applications or the first data flow and the second data flow belong to different users. For example, the first data flow and the second data flow may be downlink data flows sent by different application servers. For example, the first data flow is sent by a first application server, and the second data flow is sent by a second application server. Alternatively, the first data flow and the second data flow may be sent by a same application server to different application clients. For example, the first data flow may be sent by a first application server to a first application client, the first application client may be deployed in a first client device, the second data flow may be sent by the first application server to a second application client, and the second application client may be deployed in a second client device, where the first client device and the second client device are different terminal devices.

For example, that the network congestion exists in the transmission processes of the first data flow may mean that a quantity of data packets that belong to the first data flow and that are buffered on a specific transmission node in a transmission link of the first data flow exceeds a threshold. In this embodiment of this application, an example in which a RAN node detects that the network congestion exists in a transmission process of the first data flow is described.

602: Perform congestion control on the plurality of downlink data flows based on service requirement information respectively corresponding to the plurality of downlink data flows.

Service requirement information of any downlink data flow may include one or more of QoS requirement information of an application to which the data flow belongs, a service type, a user type of a user to which the data flow belongs, and a priority of the data flow. The service requirement information may also be referred to as service feature information. For example, the first data flow is used as an example. Service requirement information of the first data flow may be provided to the data transmission serving end by the first application server that sends the first data flow. For example, when requesting a service from the data transmission serving end, the first application server may send QoS requirement information of a first application, a service type of the first application, user types of a plurality of users served by the first application, and a priority of a data flow belonging to the first application, or the service requirement information may be provided, before the first application server requests a service from the data transmission serving end, for the data transmission serving end by an application server that provides a policy configuration. A priority of the first data flow may represent a requirement degree of the first data flow for congestion control (for example, low-delay transmission). For example, when a service to which the first data flow belongs is a service such as VR that has a high requirement for the low-delay transmission, a high priority may be configured for the first data flow.

When performing congestion control, the data transmission serving end respectively performs different congestion control on different data flows with reference to service requirement information of different data flows.

According to the foregoing solution, in this application, it is proposed that the data transmission serving end connected to the plurality of application servers performs congestion control. The data transmission serving end may perform different congestion control on different data flows based on one or more of service types of a plurality of applications, QoS requirement information, user types, and priorities of data flows. Compared with a conventional L4S congestion control solution, in the solution of this application, the data transmission serving end may respectively perform different congestion control on different data flows with reference to requirement degrees of a plurality of data flows for congestion control (for example, low-delay transmission), and a sum of transmission rates of data flows after congestion control is performed is less than a sum of transmission rates of data flows before congestion control, thereby improving a congestion control effect while alleviating the network congestion. In addition, because an execution body is the data transmission serving end, functions such as congestion marker identification and congestion feedback do not need to be configured for clients and servers of the applications, thereby reducing application development difficulty.

For example, when performing congestion control on the plurality of downlink data flows based on the service requirement information of the plurality of downlink data flows, the data transmission serving end may perform congestion control on the plurality of downlink data flows based on priorities included in the service requirement information, for example, may adjust transmission rates of different downlink data flows to different degrees based on priorities from application servers, to alleviate the network congestion. Alternatively, congestion control may be performed on the plurality of downlink data flows based on a service type included in the service requirement information, a user type, and QoS requirement information of an application. For example, the QoS requirement information may include a QoS value, and the data transmission serving end may perform different congestion control on the plurality of downlink data flows based on a value of the QoS value. Alternatively, a transmission priority may be first determined by using a service type included in the service requirement information, a user type, and QoS requirement information of an application. The transmission priority may indicate a requirement degree of a data flow for a low transmission delay. Further, the data transmission serving end may perform congestion control based on a transmission priority of each downlink data flow. The following specifically describes the congestion control solution provided in this application by using an example in which the data transmission serving end determines the transmission priority based on the service type, the user type, and the QoS requirement information of an application, and performs congestion control based on the transmission priority.

In a possible implementation, before determining that the network congestion exists, the data transmission serving end may determine transmission priorities of data flows based on service requirement information received from the plurality of application servers. For example, the service requirement information sent by the first application server may include the service type of the first application, where for example, the first application is a VR service or a video-type service; the QoS requirement information of the first application, used to represent a requirement of the first application on quality of service of data transmission; the user types of the plurality of users of the first application, where for example, the user type may include a common user and a payment user; and priorities of a plurality of data flows belonging to the first application. Optionally, after being launched, the first application server may discover, based on a common API framework (common API framework, CAPIF) defined in the 3GPP SA6 standard, a data transmission serving end that can provide a data transmission service, and send a subscription request message to the data transmission serving end. The subscription request message includes an identifier of an application, an address, and service requirement information, where the service requirement information includes one or more of a service type of the application, QoS requirement information, a user type of a user served by the application, and a priority of a data flow.

Further, the data transmission serving end may determine a transmission priority of the data flow based on the service requirement information. In an optional manner, the data transmission serving end may directly use the priority of the data flow from the application server as the transmission priority of the data flow. In another optional manner, the data transmission serving end may alternatively determine the transmission priority of the data flow based on the service type, the QoS requirement information, and the user type of the user served by the application. For example, a process of determining a priority based on the service requirement information sent by the first application server and the second application server is used as an example for description. In a possible case, if a service type of the first application is a VR service and a requirement degree for congestion control (for example, low-delay transmission) is high, and the second application is a video-type service and a requirement degree for congestion control (for example, low-delay transmission) is low, the data transmission serving end may set a transmission priority of a data flow transmitted by the first application server to be higher than a transmission priority of a data flow transmitted by the second application server. In another possible case, if a service type of the first application is the same as that of the second application, but QoS requirement information sent by the first application server indicates that the first application is a payment application and a requirement degree for congestion control (for example, low-delay transmission) is high, the data transmission serving end may set a transmission priority of a data flow transmitted by the first application server to be higher than a transmission priority of a data flow transmitted by the second application server. In still another possible case, if a user type that is of the first application client and that is sent by the first application server is a payment user, and a user type of the second application client is a common user, the data transmission serving end may set a transmission priority of a data flow transmitted between the first application server and the first application client to be higher than a transmission priority of a data flow transmitted between the first application server and the second application client.

For example, the data transmission serving end may further determine, based on the service requirement information sent by the application servers, whether congestion control needs to be performed, when network congestion occurs, on the data flows transmitted by the application servers. In an optional manner, the data transmission serving end may determine, based on a service type sent by the application server, whether congestion control needs to be performed. For example, if a type that is of the first application and that is sent by the first application server is a VR service, or is another service that has a high requirement on congestion control (for example, low-delay transmission), the data transmission serving end may determine that congestion control needs to be performed on the data flow transmitted by the first application server. In another optional manner, the data transmission serving end may determine, based on QoS requirement information sent by the application server, that congestion control needs to be performed. In still another optional manner, the data transmission serving end may provide different types of API interfaces for the application server, and the different types of API interfaces indicate requirement degrees for congestion control (for example, low-delay transmission). The data transmission serving end may determine, based on a type of a request triggered by the application server by using the API interface, that congestion control needs to be performed.

After determining that congestion control needs to be performed, the data transmission serving end may notify a network side device to perform congestion detection and add a congestion marker. For example, when determining that congestion control needs to be performed on the data flow that belongs to the first application and that is transmitted by the first application server, the data transmission serving end may notify the network side device to perform congestion detection on the data flow that belongs to the first application and add a congestion marker. When notifying the network side device, the data transmission serving end may transmit notification information to a 5G core (5G core, 5GC) control plane network element, which, for example, may be an NEF network element or a PCF network element included in the architecture shown in FIG. 1. The notification information may include an identifier of the first application, identifiers of a plurality of users of the first application, address information (traffic descriptor) of the data transmission serving end, a congestion detection indication, and a congestion marking manner, for example, the congestion marking manner may be an ECN marking manner provided in the L4S congestion control solution. Further, the 5GC control plane network element may separately send, to an access network device (for example, the RAN included in the architecture shown in FIG. 1) and a user plane network element (for example, the UPF network element included in the architecture shown in FIG. 1), information for enabling congestion detection and performing congestion marking, or it may be referred to as that the 5GC control plane network element indicates an access network device and a UPF network element to perform congestion detection and activate an L4S ECN marking function. For example, the 5GC control plane network element may send information (hereinafter referred to as an N2 message) to the access network device through an N2 interface. The information may include a QoS flow identifier (QoS flow identifier, QFI), a congestion detection indication, and an ECN marking indication, and indicate the access network device to perform congestion detection and ECN marking on a data flow having the QFI. For example, the 5GC control plane network element may send information (hereinafter referred to as an N4 message) to the UPF network element through an N4 interface. The information may include a data packet detection rule (packet detection rule, PDR) and an ECN marking indication, and indicate the UPF network element to perform ECN marking on a data flow indicated in the PDR rule.

After determining that congestion control needs to be performed on the data flow of the first application, the data transmission serving end may further notify the first data transmission client to perform congestion marker identification on a downlink data flow belonging to the first application, and send congestion feedback information to the data transmission serving end when identifying a congestion marker. The first data transmission client is deployed in any client device in which the first application is deployed. For example, an example in which the first data transmission client is deployed in the first client device is used, and the first application client is further deployed in the first client device. In an optional manner, the congestion feedback information may alternatively be the TCP echo information described in the foregoing embodiments, feedback information defined in a conventional L4S congestion control solution, or the like. In a possible implementation, when determining that network congestion exists, the data transmission serving end may perform determining based on congestion feedback information sent by a data transmission client deployed in a client device. For example, the first data flow is still used as an example, to describe a process in which the data transmission serving end determines that network congestion exists in the transmission process of the first data flow. The first data flow is any one of the plurality of downlink data flows, and the first data flow may be a downlink data flow sent by the first application server to the first application client. For example, the data transmission serving end may receive congestion feedback information that is for the first data flow and that is sent by the first data transmission client, and the data transmission serving end may determine, based on the congestion feedback information, that the network congestion exists in the transmission process of the first data flow.

When determining that the network congestion exists in the transmission processes of the plurality of downlink data flows, the data transmission serving end may respectively perform different congestion control on the plurality of downlink data flows based on one or more of the service requirement information of the plurality of downlink data flows. For example, when congestion control is performed based on the service requirement information, congestion control may be performed based on a priority included in the service requirement information, congestion control may be performed based on a service type, a user type, and QoS requirement information that are included in the service requirement information, or a transmission priority of each downlink data flow may be first determined based on a service type, a user type, and QoS requirement information and then congestion control is performed based on the transmission priority. For a process of determining the transmission priority, refer to descriptions in the foregoing embodiments. Details are not described herein again. For ease of description, the following specifically describes a congestion control process by using an example of a manner in which a transmission priority of each downlink data flow is first determined based on a service type, a user type, and QoS requirement information and then congestion control is performed based on the transmission priority. For example, when congestion control is performed, the following two manners may be used:

Manner 1: The data transmission serving end may control transmission rates of the plurality of downlink data flows based on transmission priorities of the plurality of downlink data flows.

For example, the data transmission serving end may separately determine a target transmission rate of each downlink data flow based on the transmission priorities of the plurality of downlink data flows, and control transmission of each downlink data flow based on the target transmission rate of each downlink data flow. For example, a congestion control process of the first data flow and the second data flow is used as an example for description. A transmission priority of the first data flow is higher than a transmission priority of the second data flow. In an optional manner, the data transmission serving end may reduce both transmission rates of the first data flow and the second data flow, and set a reduction degree of the transmission rate of the second data flow to be higher than a reduction degree of the transmission rate of the first data flow. In other words, a difference between an original transmission rate and a target transmission rate of the first data flow is less than a difference between an original transmission rate and a target transmission rate of the second data flow. In another optional manner, the data transmission serving end may not change the transmission rate of the first data flow, but reduce only the transmission rate of the second data flow. In other words, the original transmission rate of the first data flow is the same as the target transmission rate, so that real-time transmission of the first data flow is not affected. In still another optional manner, the data transmission serving end increases the transmission rate of the first data flow, reduces the transmission rate of the second data flow, and ensures that an overall transmission rate of the first data flow and the second data flow is reduced, thereby ensuring real-time transmission of the first data flow while alleviating the network congestion. Any one of the foregoing three optional solutions may be selected to perform the operation of determining the target transmission rate, or a solution may be selected based on a difference between the transmission priorities of the first data flow and the second data flow. For example, the foregoing third solution may be used when the difference between the transmission priority of the first data flow and the transmission priority of the second data flow is larger, and the foregoing first solution may be used when the difference between the transmission priority of the first data flow and the transmission priority of the second data flow is smaller.

Further, after the target transmission rate of each downlink data flow is determined, the target transmission rate may be used to control each downlink data flow to be transmitted to a network.

Manner 2: The data transmission serving end respectively indicates, based on transmission priorities of the plurality of downlink data flows, application servers that send the plurality of downlink data flows to perform congestion control.

In a possible implementation, the data transmission serving end may determine a target transmission rate of each downlink data flow based on the transmission priorities of the plurality of downlink data flows, and send a target transmission rate of the first data flow to the first application server, to indicate the first application server to control transmission of the first data flow based on the target transmission rate of the first data flow. The first application server is an application server that sends the first data flow. For example, when controlling transmission of the first data flow based on the target transmission rate, the first application server may control an output rate of the first data flow after generating the first data flow, so that the first data flow is transmitted to a network based on the target transmission rate. Alternatively, a generation rate of the first data flow may be controlled, for example, an encoding format or a rendering manner of the first data flow may be adjusted, to reduce the generation rate of the first data flow, thereby reducing the transmission rate of the first data flow.

In another possible implementation, the data transmission serving end may determine a target encoding format or a target rendering manner of each downlink data flow based on transmission priorities of the plurality of downlink data flows, and send the target encoding format or the target rendering manner of the first data flow to the first application server, to indicate the first application server to generate the first data flow based on the target encoding format or the target rendering manner, to reduce a generation rate of the first data flow, thereby reducing the transmission rate of the first data flow. For example, when determining the target encoding format or the target rendering manner of the first data flow, the data transmission serving end may first determine a target transmission rate of the first data flow based on the transmission priorities of the plurality of downlink data flows, and further determine a generation rate of the first data flow based on the target transmission rate of the first data flow, thereby determining the target encoding format and the target rendering manner of the first data flow.

In another possible implementation, the data transmission serving end may determine congestion information of each downlink data flow based on the transmission priorities of the plurality of downlink data flows. The congestion information indicates a congestion degree of the downlink data flow in a transmission process. For example, the congestion information may include a congestion level, a congestion proportion, and the like. A higher transmission priority of the downlink data flow corresponds to a lower congestion degree indicated by the congestion information. Further, the data transmission serving end may send congestion information of the first data flow to the first application server, to indicate the first application server to perform congestion control on the first data flow based on the congestion information. For example, if the first data flow is a data flow with a higher transmission priority, the data transmission serving end may report, to the first application server, congestion information indicating a lower congestion degree. On the contrary, if the first data flow is a data flow with a lower transmission priority, the data transmission serving end may report, to the first application server, congestion level information indicating a higher congestion degree. Therefore, the first application server may adjust an output rate or a generation rate of the first data flow based on the congestion information of the first data flow.

It should be noted that, both Manner 1 and Manner 2 in the above are described by using an example in which congestion control is performed based on a transmission priority. During actual application, congestion control may alternatively be performed directly by using service requirement information. For example, if a QoS requirement value of the first data flow is lower than a QoS requirement value of the second data flow, the data transmission serving end may adjust the transmission rate of the first data flow to be lower. For another example, if a requirement of a service type of the first data flow for congestion control (for example, low-delay transmission) is lower than a requirement of a service type of the second data flow for congestion control (for example, low-delay transmission), the data transmission serving end may also adjust the transmission rate of the first data flow to be lower.

According to the foregoing solution, in this application, it is proposed that in a downlink data transmission scenario, the data transmission serving end performs different congestion control on different downlink data flows based on one or more of a service type, a user type, a QoS requirement of an application, and a priority of each downlink data flow, so that a rate at which the downlink data flow is input to a network can be controlled when network congestion occurs, thereby alleviating network congestion.

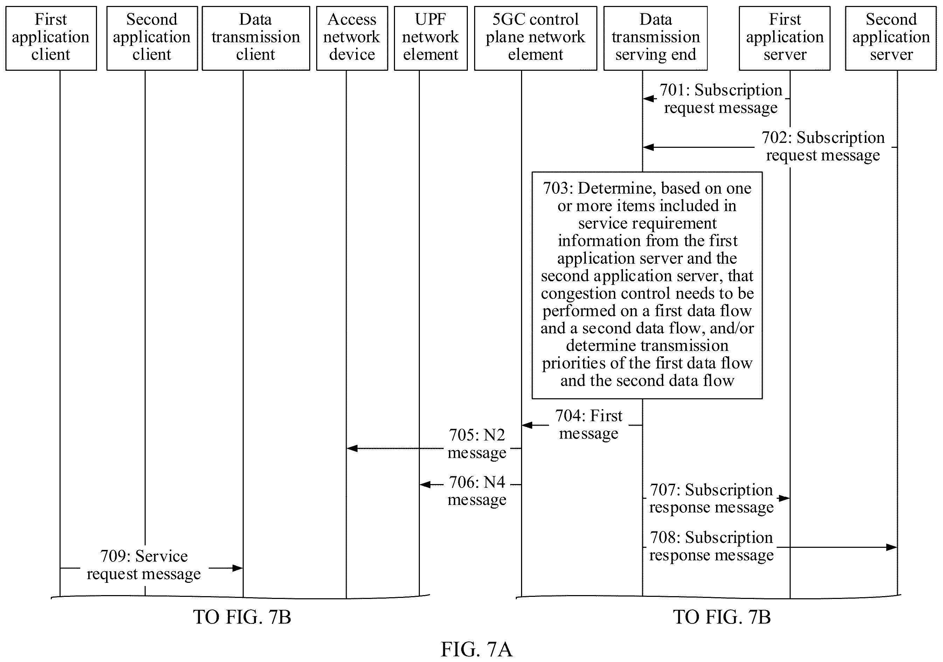

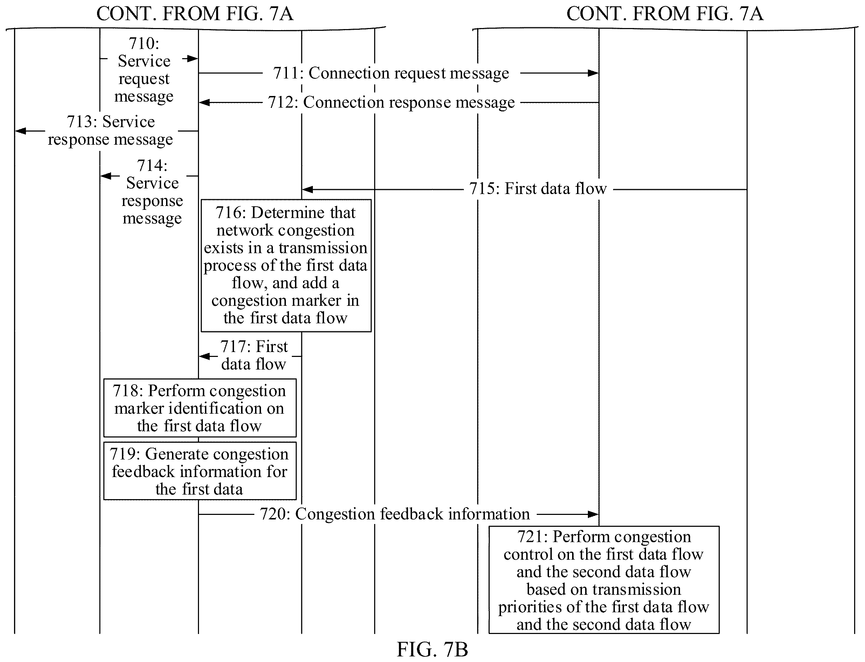

For ease of understanding of the congestion control solution in the downlink data transmission scenario proposed in embodiments of this application, the following describes the congestion control solution with reference to specific embodiments. FIG. 7A and FIG. 7B are a schematic flowchart of a congestion control method in a downlink data transmission scenario according to an embodiment of this application. For example, in FIG. 7A and FIG. 7B, that a data transmission serving end is connected to a first application server and a second application server is used as an example. The first application server corresponds to a first application client. The second application server corresponds to a second application client. The first application client and the second application client are deployed in a same client device. A data transmission client may be further deployed in the client device. In addition, in FIG. 7A and FIG. 7B, a solution in which a transmission priority is first determined and then congestion control is performed based on the transmission priority is used as an example for description. It should be learned that in an implementation process of the method procedure shown in FIG. 7A and FIG. 7B, a solution in which congestion control is directly performed based on a priority from an application server may alternatively be used, or a solution in which congestion control is performed based on one or more of QoS requirement information, a service type, and a user type from the application server may be used. The method procedure shown in FIG. 7A and FIG. 7B specifically includes the following steps.

701: The first application server sends a subscription request message to the data transmission serving end.

For example, for a process in which the first application server discovers the data transmission serving end, refer to the description in the foregoing embodiments. Details are not described herein again. Service requirement information of a plurality of downlink data flows belonging to a first application in the subscription request message sent by the first application server specifically includes one or more of a service type of the first application, a user type of a plurality of users served by the first application, QoS requirement information of the first application, a priority of the first application, or a priority of a user served by the first application.

It should be noted that the subscription request message used in this application is merely an example, and a name of a message sent by the first application server when the first application server requests a service from the data transmission serving end is not specifically limited, for example, may also be referred to as a message, a subscription message, or a request message.

702: The second application server sends a subscription request message to the data transmission serving end.

The subscription request message sent by the second application server includes service requirement information of a plurality of downlink data flows belonging to a second application.

703: The data transmission serving end determines, based on one or more items included in the service requirement information from the first application server and the second application server, that congestion control needs to be performed on a first data flow and a second data flow, and/or determines transmission priorities of the first data flow and the second data flow.

The first data flow is a downlink data flow sent by the first application server to the first application client, and the second data flow is a downlink data flow sent by the second application server to the second application client. For example, the data transmission serving end may further respectively provide different types of API interfaces for the first application server and the second application server. The different types of API interfaces indicate whether applications need congestion control (for example, low-delay transmission). Therefore, the data transmission serving end may further determine, based on types of API interfaces triggered by the first application server and the second application server, that congestion control needs to be performed on data flows sent by the first application server and the second application server.

For example, for a process in which the data transmission serving end determines transmission priorities of different data flows, refer to related descriptions in the foregoing embodiments. Details are not described herein again.

704: The data transmission serving end sends a first message to a 5GC control plane network element.

The first message indicates to perform network congestion detection on the downlink data flows sent by the first application server and the second application server and add a congestion marker. For example, the first message may include identifiers of the first application and the second application, identifiers of a plurality of users of the first application and the second application, address information of the data transmission serving end, a congestion detection indication, and a congestion marking manner. For example, the congestion marking manner may be the ECN marking manner provided in the L4S congestion control solution. The identifier of the application may be an application server ID (for example, a VAL server ID), may be an application service ID (for example, a VAL service ID), or may be a combination of a VAL server ID and a VAL service ID.

705: The 5GC control plane network element sends an N2 message to an access network device.

For the N2 message, refer to related descriptions in the foregoing embodiments. Details are not described herein again.

706: The 5GC control plane network element sends an N4 message to a UPF network element.

For the N4 message, refer to related descriptions in the foregoing embodiments. Details are not described herein again.

707: The data transmission serving end sends a subscription response message to the first application server.

708: The data transmission serving end sends a subscription response message to the second application server.

709: The data transmission client receives a service request message from the first application client.

710: The data transmission client receives a service request message from the second application client.

711: The data transmission client sends a connection request message to the data transmission serving end.

For example, the data transmission client may obtain preconfigured address information of the data transmission serving end, and send a connection request message to the data transmission serving end based on the address information. The connection request message may include an identifier of the data transmission client, a user identifier, address information (for example, may include an IP address and a port number) of the data transmission client, and identifiers of the first application and the second application. For example, the identifier of the first application may be a VAL server ID and/or a VAL service ID, or may be a SEALDD service flow identifier (SEALDD flow ID).

712: The data transmission serving end receives the connection request message, and returns a connection response message to the data transmission client.

For example, after receiving the connection request message, the data transmission serving end may send the connection response message to the data transmission client based on the need to perform congestion control on the first data flow and the second data flow that is determined in step 703. The connection response message includes an identifier and address information of the data transmission serving end, and indication information that indicates the data transmission client to perform congestion marker identification and congestion feedback on the first data flow and the second data flow.

713: The data transmission client returns a service response message to the first application client.

714: The data transmission client returns a service response message to the second application client.

715: The first application server sends the first data flow to the access network device.

A source address of the first data flow is an address of the first application server, and a destination address is an address of the first application client.

716: The access network device receives the first data flow, determines that network congestion exists in a transmission process of the first data flow, and adds a congestion marker to the first data flow.

For example, after receiving the first data flow, the access network device may determine, based on the N2 message received in step 705 in the above, whether congestion detection needs to be performed on the first data flow, and then determine, by using data packets, that belong to the first data flow and that are in a buffer, that exceed a threshold, after determining that congestion detection needs to be performed, that the network congestion exists in the transmission process of the first data flow. Further, the congestion marker may be added to the first data flow. For example, marking may be performed in the ECN marking manner in the L4S congestion control solution.

Optionally, the access network device may directly perform ECN marking on the first data flow, or may send, to the UPF network element, information indicating that the network congestion exists in the first data flow, so that the UPF network element performs ECN marking. For example, the access network device may notify, by using an extension header (header) defined in the 3GPP GTP-U protocol specification, the UPF network element to perform ECN marking.

717: The access network device sends, to the data transmission client, the first data flow to which the congestion marker is added.

718: The data transmission client receives the first data flow, and performs congestion marker identification on the first data flow.

For example, after receiving the first data flow, the data transmission client may first determine, based on the connection response message received in step 712 in the above, that congestion marker identification needs to be performed on the first data flow, and then further determine that a packet header of a received data packet belonging to the first data flow includes the congestion marker.

719: The data transmission client generates congestion feedback information for the first data flow.

For example, for a process of generating the congestion feedback information, refer to related descriptions in the foregoing embodiments. Details are not described herein again.

720: The data transmission client sends the congestion feedback information for the first data flow to the data transmission serving end.

It should be noted that the process of transmitting the first data flow described in step 715 to step 720 in the above may also be applied to a process of transmitting the second data flow, and the second data flow is a data flow sent by the second application server to the second application client. FIG. 7A and FIG. 7B do not show transmission, congestion detection, congestion marking, congestion identification, and congestion feedback processes of the second data flow. In other words, the data transmission serving end also receives congestion feedback information that is fed back by the data transmission client and that is for the second data flow.

721: The data transmission serving end receives the congestion feedback information, and performs congestion control on the first data flow and the second data flow based on the transmission priorities of the first data flow and the second data flow.

For example, the data transmission serving end may directly control transmission rates of the first data flow and the second data flow, or notify the first application server and the second application server to perform congestion control. For a specific process, refer to content described in Manner 1 and Manner 2 in the foregoing embodiments. Details are not described herein again.

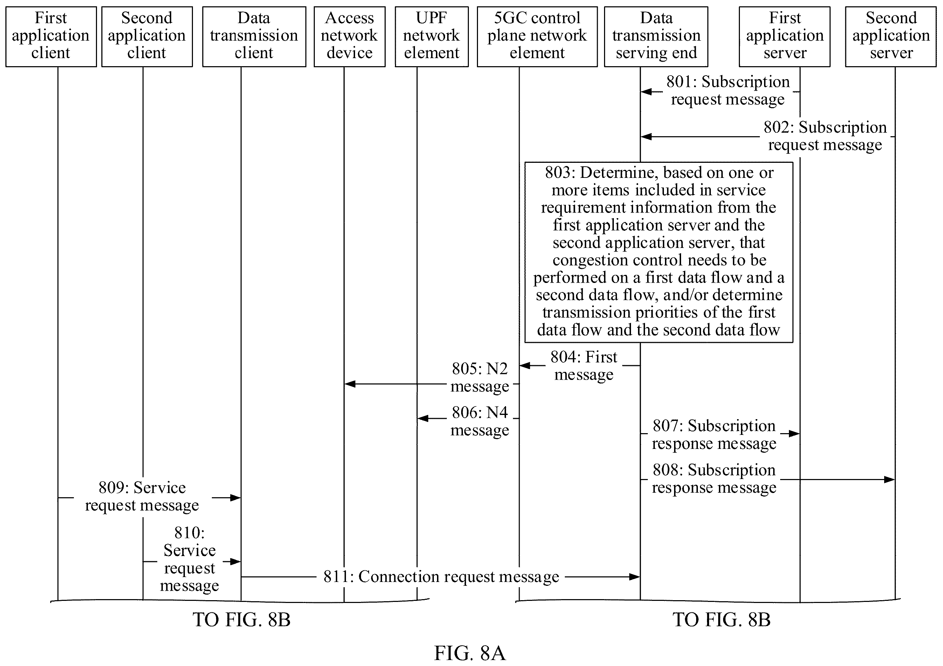

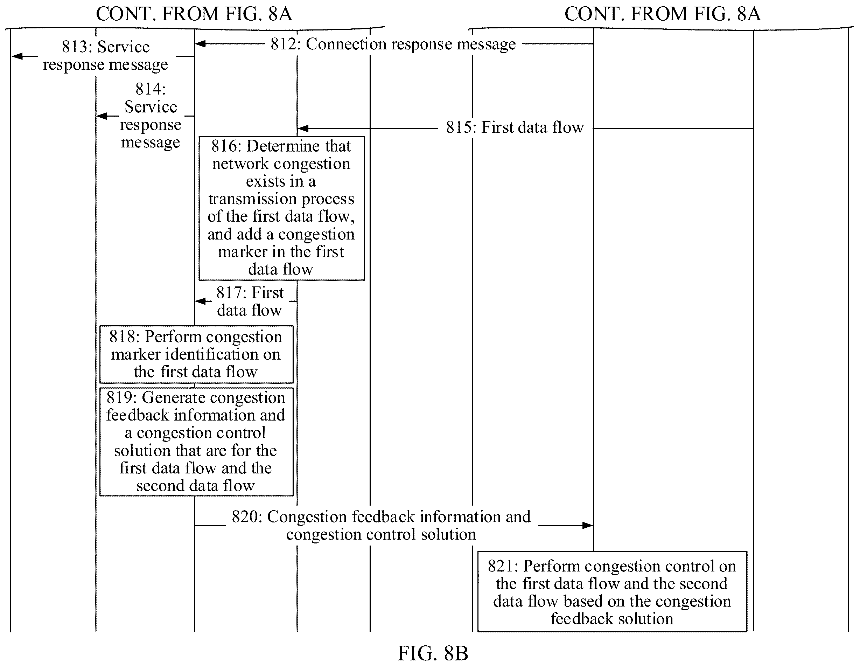

In some embodiments, the data transmission serving end may further send service requirement information of each downlink data flow to the data transmission client, so that the data transmission client performs congestion control. The following describes a solution in which the data transmission client performs congestion control. For example, FIG. 8A and FIG. 8B are a schematic flowchart of a congestion control method in another downlink data transmission scenario according to an embodiment of this application. In a congestion control step, congestion control may be performed by using a priority from an application server, congestion control may be performed by using one or more of QoS requirement information, a service type, and a user type from the application server, or a transmission priority may be first determined based on service requirement information from the application server and then congestion control is performed based on the transmission priority. For ease of description, in FIG. 8A and FIG. 8B, a manner in which the transmission priority is first determined and then congestion control is performed based on the transmission priority is still used as an example for description. To be specific, a data transmission serving end sends determined priorities of downlink data flows to the data transmission client. The method procedure shown in FIG. 8A and FIG. 8B specifically includes the following steps.

For step 801 to step 811, refer to step 701 to step 711 in FIG. 7A and FIG. 7B.

812: The data transmission serving end receives a connection request message, and returns a connection response message to the data transmission client.

For example, after receiving the connection request message, the data transmission serving end may send the connection response message to the data transmission client based on the need to perform congestion control on a first data flow and a second data flow that is determined in step 803. The connection response message includes an identifier and address information of the data transmission serving end, indication information that indicates the data transmission client to perform congestion marker identification and congestion feedback on the first data flow and the second data flow, and respective transmission priorities of the first data flow and the second data flow.

For step 813 to step 818, refer to step 713 to step 718 in FIG. 7B, and details are not described herein again. It should be noted that FIG. 8A and FIG. 8B do not show transmission, congestion detection, congestion marking, and congestion identification processes of the second data flow. In other words, the data transmission client also performs congestion identification on the second data flow.

819: The data transmission client generates congestion feedback information and a congestion control solution that are for the first data flow and the second data flow.

The congestion control solution is generated by the data transmission client based on the transmission priorities of the first data flow and the second data flow, and is used to respectively perform congestion control on the first data flow and the second data flow. For example, for the congestion control solution, refer to Manner 1 and Manner 2 described in the foregoing embodiments. Details are not described herein again.

820: The data transmission client sends the congestion feedback information and the congestion control solution to the data transmission serving end.

821: The data transmission serving end receives the congestion feedback information and the congestion control solution, and performs congestion control on the first data flow and the second data flow based on the congestion feedback solution.

For details, refer to step 721 in FIG. 7B, and details are not described herein again.

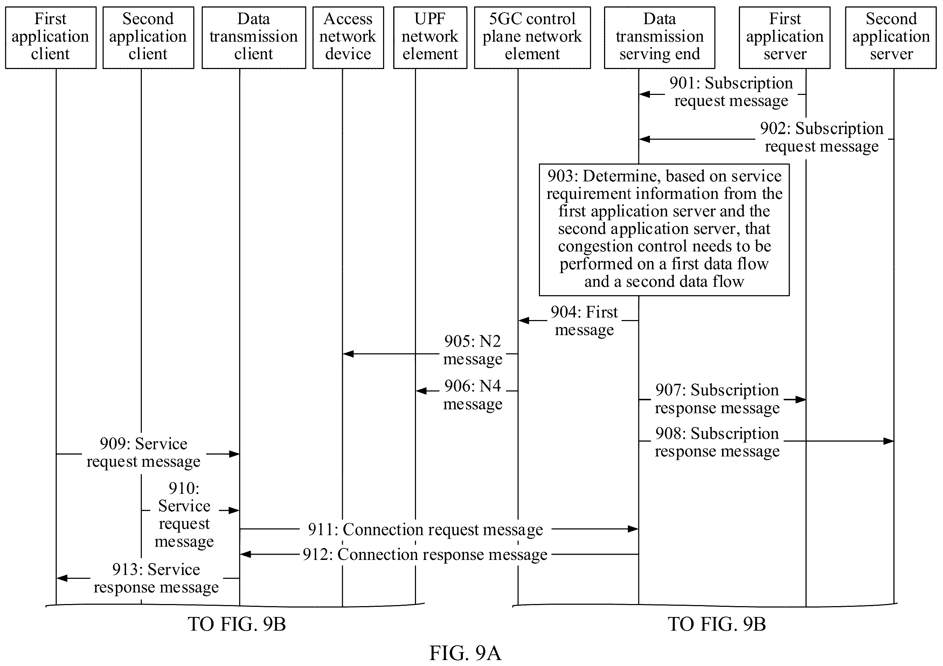

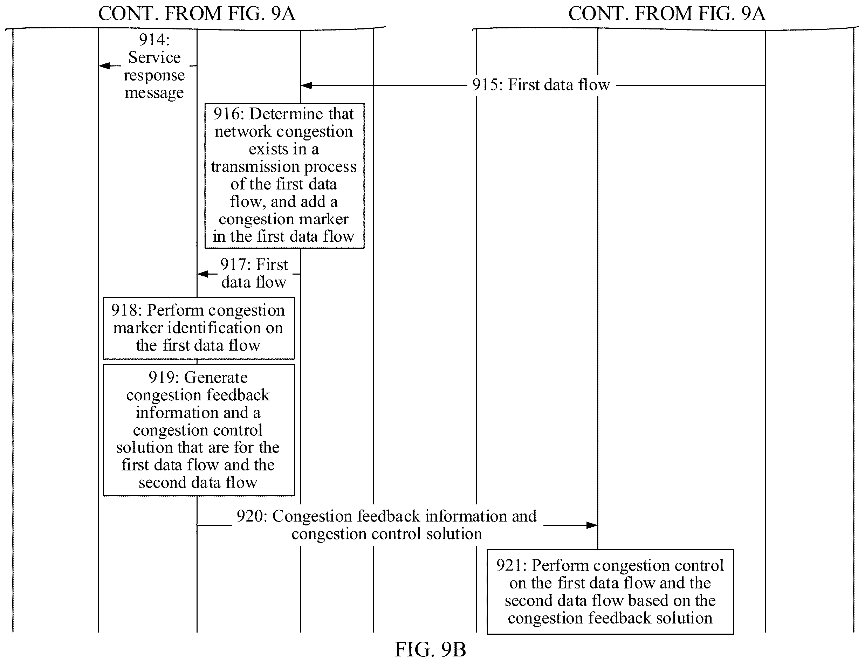

In some embodiments, when the data transmission client performs congestion control, service requirement information of each downlink data flow may be further provided by an application client. For example, when sending a service request to the data transmission client, each application client may add service requirement information of the application client in the service request, so that the data transmission client may determine a requirement degree of a data flow sent to each application client for congestion control (for example, low-delay transmission). Optionally, the service requirement information of the application client may be preconfigured in each application client, or the application server may send service requirement information of each data flow to each application client based on a user identifier. In some other embodiments, the data transmission serving end may further determine a transmission priority of each downlink data flow based on the service requirement information from the application server, and then provide the transmission priority for the data transmission client, so that the data transmission client performs congestion control. For example, after generating the transmission priority, the data transmission serving end may send the transmission priority to each application server, and each application server may send the transmission priority of each data flow to a corresponding application client based on the user identifier. Further, each application client may send the transmission priority to the data transmission client. A specific process of performing congestion control is described below by using an example in which the data transmission client directly receives a priority of each data flow. For example, FIG. 9A and FIG. 9B are a schematic flowchart of a congestion control method in another downlink data transmission scenario according to an embodiment of this application. The method specifically includes the following steps.

For step 901 and step 902, refer to step 701 and step 702 in FIG. 7A.

903: A data transmission serving end determines, based on service requirement information from a first application server and a second application server, that congestion control needs to be performed on a first data flow and a second data flow.

For a specific process, refer to related descriptions of step 703 in FIG. 7A. Details are not described herein again.

For step 904 to step 908, refer to step 704 to step 708 in FIG. 7A.

909: The data transmission client receives a service request message from the first application client.

910: The data transmission client receives a service request message from the second application client.

The service request messages sent by the first application client and the second application client include an application client identifier and a transmission priority of an application, so that the data transmission client may determine, based on the received service request messages, a transmission priority of a downlink data flow (to be specific, transmission priorities of the first data flow and the second data flow) sent to each application client.

For step 911 to step 918, refer to step 711 to step 718 in FIG. 7B.

For step 919 to step 921, refer to step 819 to step 821 in FIG. 8B.

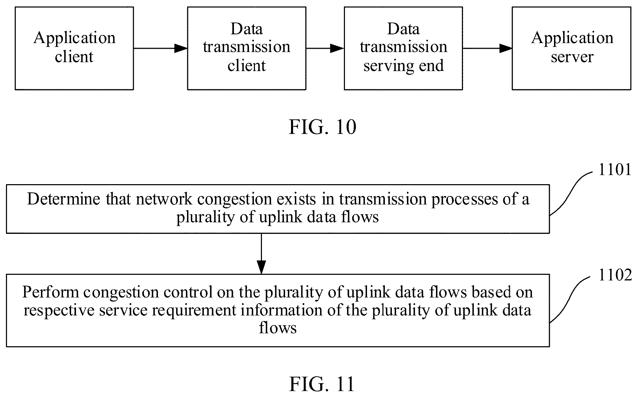

In some other scenarios, in embodiments of this application, a congestion control solution in an uplink data transmission scenario is further proposed. For ease of understanding of the solution of this application, the uplink data transmission scenario is first described. FIG. 10 is a diagram of an architecture of an uplink data transmission scenario according to an embodiment of this application. The uplink data transmission scenario includes an application client, an application server, a data transmission client, and a data transmission serving end. For details, refer to the descriptions of the application client, the application server, the data transmission client, and the data transmission serving end in FIG. 5. Details are not described herein again. It should be noted that FIG. 10 is merely an example, and quantities of application servers, application clients, and data transmission clients included in the uplink data transmission scenario are not limited in this application. The following describes the congestion control solution provided in this application with reference to the scenario shown in FIG. 10. For example, FIG. 11 is a schematic flowchart of a congestion control method according to an embodiment of this application. For example, the method procedure shown in FIG. 11 may be implemented by the data transmission serving end included in the scenario shown in FIG. 10, or may be implemented by a specific component included in the data transmission serving end, for example, may be implemented by an apparatus such as a chip or a processor included in the data transmission serving end. The data transmission serving end is connected to a plurality of application servers, and is configured to provide a data transmission service for the plurality of application servers. The method procedure shown in FIG. 11 specifically includes the following steps.

1101: Determine that network congestion exists in transmission processes of a plurality of uplink data flows.

The plurality of uplink data flows include at least a third data flow and a fourth data flow, the third data flow and the fourth data flow are any two different uplink data flows in the plurality of uplink data flows, and the third data flow and the fourth data flow belong to different applications or the third data flow and the fourth data flow belong to different users. For example, the third data flow may be sent by a first application client to a first application server, and the fourth data flow may be sent by a second application client to a second application server. The first application client and the second application client may be deployed in a same client device, or may be deployed in different client devices.

For example, that network congestion exists in a transmission process of the third data flow may mean that a quantity of data packets that belong to the third data flow and that are buffered on a specific transmission node in a transmission link of the third data flow exceeds a threshold.

1102: Perform congestion control on the plurality of uplink data flows based on respective service requirement information of the plurality of uplink data flows.

Service requirement information of any uplink data flow may include one or more of QoS requirement information of an application to which the data flow belongs, a service type, a user type of a user to which the data flow belongs, and a priority of the data flow.

For example, when congestion control is performed on the plurality of uplink data flows based on the service requirement information, congestion control may be directly performed based on a priority, congestion control may be performed based on QoS requirement information, a service type, and a user type, or a transmission priority of each uplink data flow may be first determined based on QoS requirement information, a service type, and a user type and then congestion control is performed based on the transmission priority.

For example, for a process in which the data transmission serving end performs congestion control on each uplink data flow based on the service requirement information from the application server, refer to the description of the process of performing congestion control on each downlink data flow based on the service requirement information in the foregoing embodiments. Details are not described herein again. For an uplink data flow on which congestion control needs to be performed, the data transmission serving end may store service requirement information of the uplink data flow, and notify a network side device to perform congestion detection and congestion marking on the uplink data flow. For a specific notification process, refer to the process of indicating the network side device to perform congestion detection and congestion marking on the downlink data flow in the foregoing embodiments.

For example, the third data flow and the fourth data flow are used as an example. After determining that congestion control needs to be performed on the third data flow and the fourth data flow, the data transmission serving end may notify the network side device to perform network congestion detection and congestion marking on the third data flow and the fourth data flow. Further, after receiving the third data flow and the fourth data flow that are from the network side device, the data transmission serving end may perform congestion marker identification on the third data flow and the fourth data flow, to determine that network congestion exists in transmission processes of the third data flow and the fourth data flow. Further, a congestion control solution for the third data flow and the fourth data flow may be generated based on service requirement information of the third data flow and the fourth data flow. In a possible implementation, the congestion control solution may include target transmission rates of the third data flow and the fourth data flow, to indicate to control transmission of the third data flow and the fourth data flow based on the target transmission rates. For example, for a process in which the data transmission serving end determines the target transmission rates of the third data flow and the fourth data flow based on the service requirement information, refer to the process of determining the target transmission rate of the downlink data flow based on the service requirement information described in Manner 1 in the above. In another possible implementation, the congestion control solution may include target encoding formats or target rendering manners of the third data flow and the fourth data flow, to indicate manners of generating the third data flow and the fourth data flow. For a specific process of determining the target encoding formats or the target rendering manners of the third data flow and the fourth data flow based on the service requirement information, refer to the process of determining the target encoding format or the target rendering manner of the downlink data flow based on the service requirement information described in Manner 2 in the above. In yet another possible implementation, the congestion control solution may include congestion information of the third data flow and the fourth data flow, to indicate to perform congestion control based on the congestion information. For a specific process of determining the congestion information based on the service requirement information, refer to the process of determining the congestion information of the downlink data flow based on the service requirement information described in Manner 2 in the above. Further, the data transmission serving end may send congestion feedback information to the data transmission client, where the congestion feedback information includes the congestion control solution generated by the data transmission serving end. It should be noted that the third data flow is sent by the first application client, and the fourth data flow is sent by the second application client. It is defined herein that the first application client, the second application client, and the data transmission client are deployed in a same client device.

In a possible implementation, after receiving the congestion feedback information, the data transmission client may directly control transmission of the third data flow and the fourth data flow based on the respective target transmission rates of the third data flow and the fourth data flow that are included in the congestion feedback information. In another possible implementation, after receiving the congestion feedback information, the data transmission client may further forward the congestion feedback information to the first application client and the second application client. The first application client may control a generation rate or a transmission rate of the third data flow based on the congestion feedback information, and the second application client may control a generation rate or a transmission rate of the fourth data flow based on the congestion feedback information.

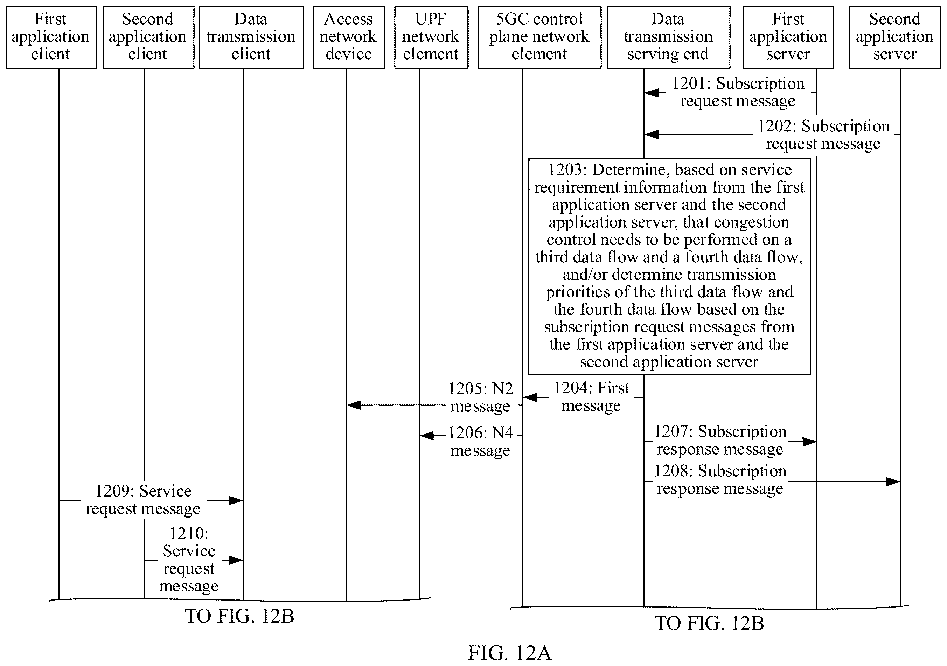

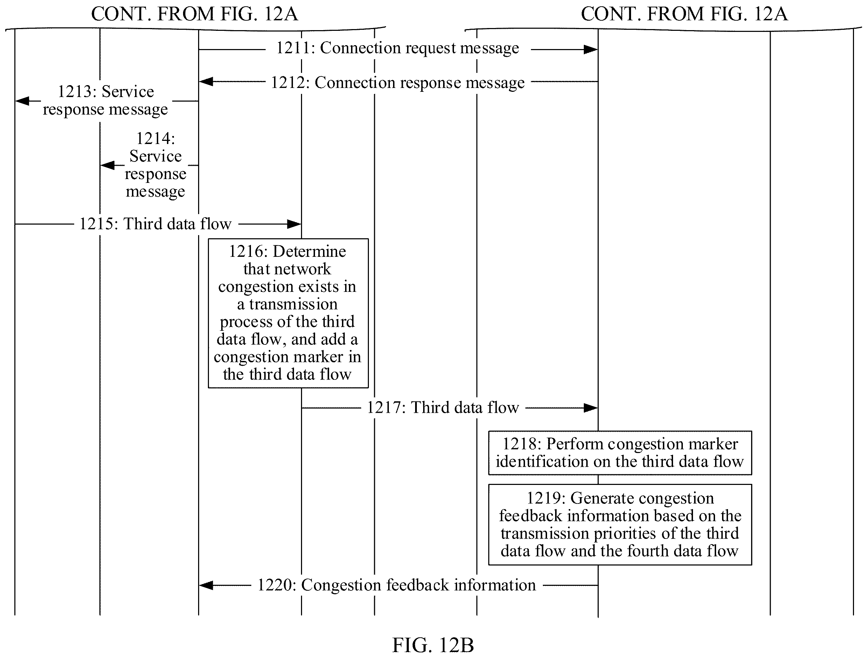

For ease of understanding of the congestion control solution in the uplink data transmission scenario proposed in embodiments of this application, the following describes the congestion control solution with reference to specific embodiments. FIG. 12A and FIG. 12B are a schematic flowchart of a congestion control method in an uplink data transmission scenario according to an embodiment of this application. For example, in FIG. 12A and FIG. 12B, an example in which a data transmission serving end is connected to a first application server and a second application server is used, the first application server corresponds to a first application client, and the second application server corresponds to a second application client. In FIG. 12A and FIG. 12B, an example in which the first application client and the second application client are deployed in a same client device is used. A data transmission client may be further deployed in the client device. The method procedure shown in FIG. 7A and FIG. 7B specifically includes the following steps.

For step 1201 and step 1202, refer to step 701 and step 702 in FIG. 7A.

1203: The data transmission serving end determines, based on service requirement information from the first application server and the second application server, that congestion control needs to be performed on a third data flow and a fourth data flow, and/or determines transmission priorities of the third data flow and the fourth data flow based on subscription request messages from the first application server and the second application server.

The third data flow is an uplink data flow sent by the first application client to the first application server, and the second data flow is an uplink data flow sent by the second application client to the second application server. For example, for determining that congestion control needs to be performed and a manner of determining a transmission priority, refer to descriptions of determining to perform congestion control on the downlink data flow and determining the transmission priority in step 703 in FIG. 7A.

For step 1204 to step 1214, refer to step 704 to step 714 in FIG. 7A and FIG. 7B. It should be noted that the solution described in FIG. 7A and FIG. 7B is for the downlink data transmission scenario, and needs to be correspondingly modified to be for the uplink data transmission scenario in FIG. 12A and FIG. 12B. For example, in step 1204, a first message indicates to perform network congestion detection on uplink data flows sent by the first application client and the second application client and add a congestion marker.

1215: The first application client sends the third data flow to an access network device.

1216: The access network device receives the third data flow, determines that network congestion exists in a transmission process of the third data flow, and adds a congestion marker in the third data flow.

1217: The access network device sends, to the data transmission serving end, the third data flow in which the congestion marker is added.

1218: The data transmission serving end receives the third data flow, and performs congestion marker identification on the third data flow.

It should be noted that the transmission process of the third data flow described in step 1215 to step 1218 may also be applied to a transmission process of the fourth data flow. FIG. 12A and FIG. 12B do not show transmission, congestion detection, congestion marking, and congestion identification processes of the fourth data flow. In other words, the data transmission serving end also performs congestion marker identification on the fourth data flow.

1219: The data transmission serving end generates congestion feedback information based on the transmission priorities of the third data flow and the fourth data flow.

The congestion feedback information includes a congestion control solution for the third data flow and the fourth data flow. For a specific congestion control solution generation process, refer to related descriptions in the foregoing embodiments. Details are not described herein again.

1220: The data transmission serving end sends congestion feedback information to the data transmission client.

Optionally, the data transmission client may directly perform congestion control on the third data flow and the fourth data flow based on the congestion feedback information, or may forward the congestion feedback information to the first application client and the second application client, perform congestion control on the third data flow by using the first application client, and perform congestion control on the fourth data flow by using the second application client.

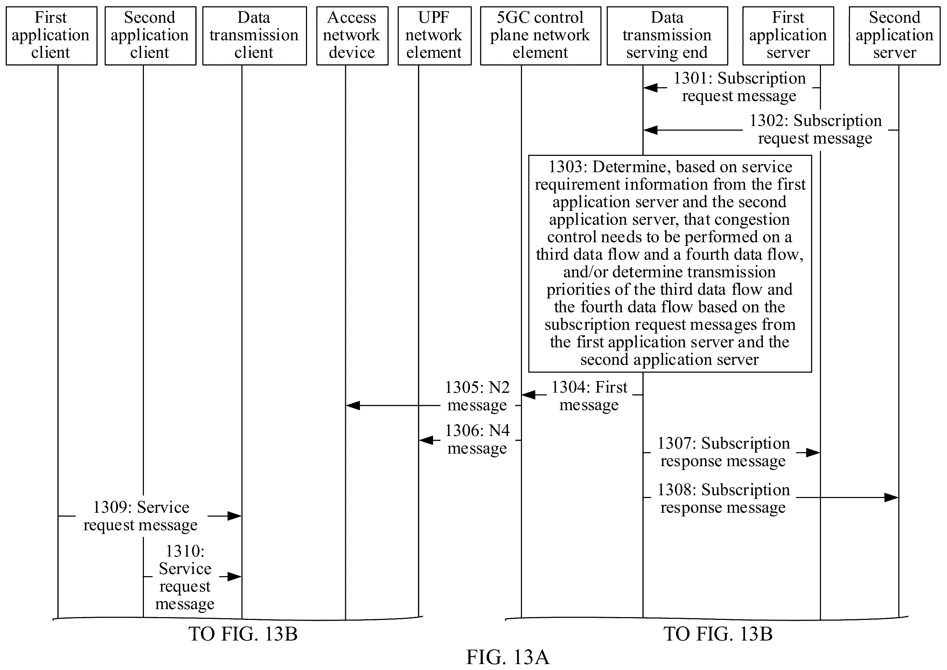

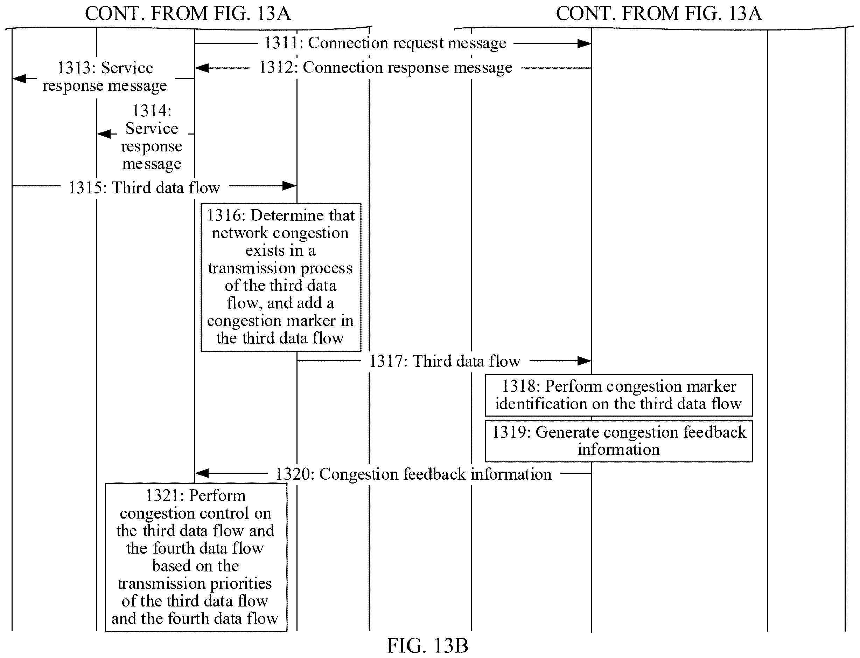

In some embodiments, the data transmission serving end may further send a determined transmission priority of each uplink data flow to the data transmission client, so that the data transmission client performs congestion control. The following describes a solution in which the data transmission client performs congestion control. For example, FIG. 13A and FIG. 13B are a schematic flowchart of a congestion control method in another uplink data transmission scenario according to an embodiment of this application. The method specifically includes the following steps.

For step 1301 to step 1311, refer to step 1201 to step 1211 in FIG. 12A and FIG. 12B.

1312: A data transmission serving end receives a connection request, and returns a connection response message to a data transmission client.

The connection response message includes an identifier and address information of the data transmission serving end, indication information that indicates the data transmission client to perform congestion marker identification and congestion feedback on a third data flow and a fourth data flow, and transmission priorities of the third data flow and the fourth data flow.

For step 1313 to step 1318, refer to step 1213 to step 1218 in FIG. 12B.

1319: The data transmission serving end generates congestion feedback information.

The congestion feedback information indicates that network congestion exists in transmission processes of the third data flow and the fourth data flow.

1320: The data transmission serving end sends congestion feedback information to the data transmission client.

1321: The data transmission client receives the congestion feedback information, and performs congestion control on the third data flow and the fourth data flow based on the transmission priorities of the third data flow and the fourth data flow.

For example, the data transmission client may directly control transmission rates of the third data flow and the fourth data flow, or notify a first application server and a second application server to perform congestion control. For a specific process, refer to related descriptions in the foregoing embodiments. Details are not described herein again.

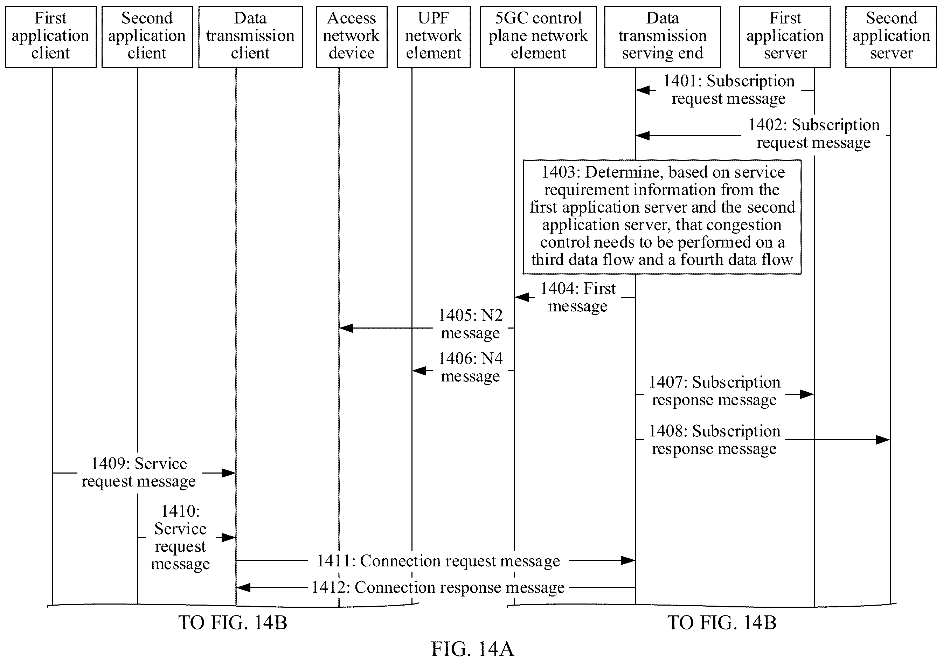

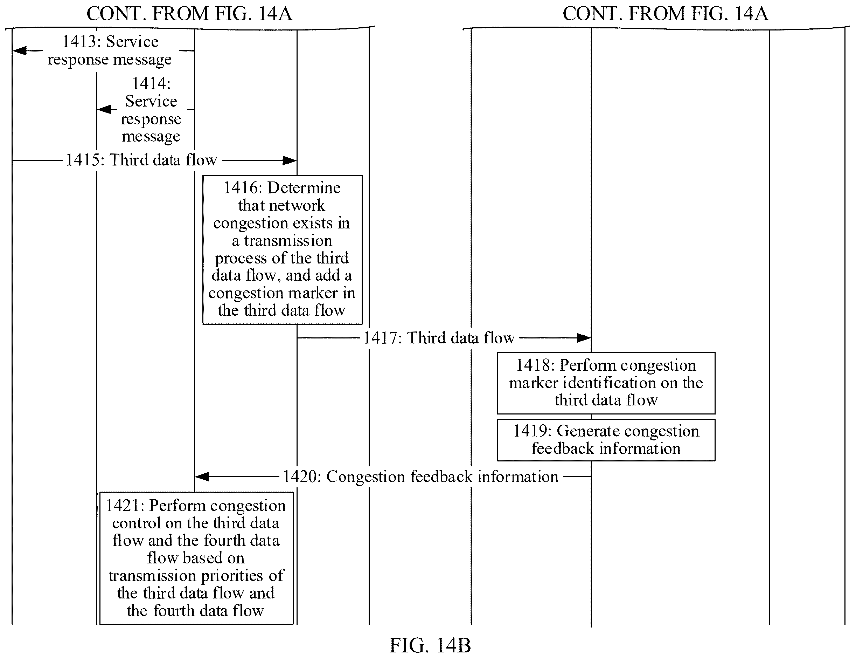

In some embodiments, when the data transmission client performs congestion control, transmission priority information of each uplink data flow may be further provided by an application client. For example, the application client may determine a transmission priority based on service requirement information configured by the application client, or the data transmission serving end may generate the transmission priority, and provide the transmission priority to each application client by using an application server. For example, FIG. 14A and FIG. 14B are a schematic flowchart of a congestion control method in another uplink data transmission scenario according to an embodiment of this application. The method specifically includes the following steps.

For step 1401 and step 1402, refer to step 1201 and step 1202 in FIG. 12A.

1403: A data transmission serving end determines, based on service requirement information from a first application server and a second application server, that congestion control needs to be performed on a third data flow and a fourth data flow.

For step 1404 to step 1408, refer to step 1204 to step 1208 in FIG. 12A.

1409: The data transmission client receives a service request message from the first application client.

1410: The data transmission client receives a service request message from the second application client.

The service request messages sent by the first application client and the second application client include an application client identifier and a transmission priority of an application, so that the data transmission client may determine, based on the received service request messages, a transmission priority of an uplink data flow (to be specific, transmission priorities of the third data flow and the fourth data flow) sent by each application client.

For step 1411 to step 1418, refer to step 1211 to step 1218 in FIG. 12B.

For step 1419 to step 1421, refer to step 1319 to step 1321 in FIG. 13B.

With reference to the accompanying drawings, the following describes a congestion control apparatus configured to implement the foregoing methods in embodiments of this application. Therefore, all the foregoing content may be used in the following embodiments. Repeated content is not described again.

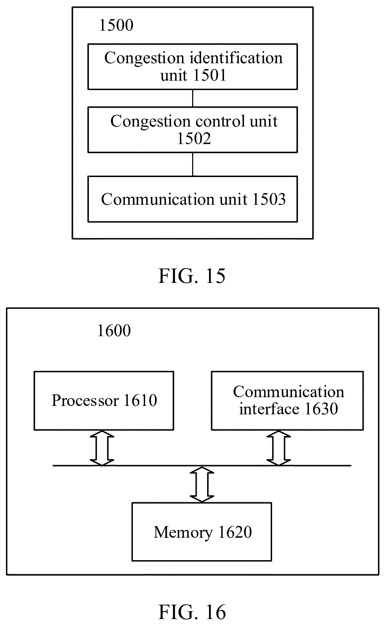

FIG. 15 is an example block diagram of a congestion control apparatus 1500 according to an embodiment of this application. The congestion control apparatus 1500 may correspondingly implement functions or steps implemented by the data transmission serving end or the data transmission client in the foregoing method embodiments. The congestion control apparatus 1500 may include a congestion identification unit 1501, a congestion control unit 1502, and a communication unit 1503, and optionally, may further include a storage unit, where the storage unit may be configured to store instructions (code or a program) and/or data. The congestion identification unit 1501, the congestion control unit 1502, and the communication unit 1503 may be coupled to the storage unit. For example, the congestion identification unit 1501 may read the instructions (the code or the program) and/or the data in the storage unit, to implement a corresponding method. The foregoing units may be independently disposed, or may be partially or completely integrated.

In a possible implementation, the congestion control apparatus 1500 can correspondingly implement behavior and a capability of the data transmission serving end in the foregoing method embodiments. For example, the congestion control apparatus 1500 may be the data transmission serving end, or may be a component (for example, a chip or a circuit) used in the data transmission serving end. The congestion identification unit 1501 may be configured to perform the step that is of determining, by the data transmission serving end, that network congestion exists and that is described in the foregoing embodiments. The congestion control unit 1502 may be configured to perform the step that is of performing, by the data transmission serving end, congestion control on a data flow and that is described in the foregoing method embodiments. The communication unit 1503 is configured to perform all receiving or sending operations that are performed by the data transmission serving end and described in the foregoing method embodiments.

For example, in a downlink data flow transmission scenario, the congestion identification unit 1501 is configured to determine that network congestion exists in transmission processes of a plurality of downlink data flows, where the plurality of downlink data flows include at least two downlink data flows from different application servers or include at least two downlink data flows belonging to different users; and the congestion control unit 1502 is configured to perform congestion control on the plurality of downlink data flows based on respective service requirement information of the plurality of downlink data flows, where service requirement information of a first data flow includes at least one of QoS requirement information of an application to which the first data flow belongs, a service type, a user type of a user to which the first data flow belongs, and a priority, and the first data flow is any one of the plurality of downlink data flows. For another example, in an uplink data flow transmission scenario, the congestion identification unit 1501 is configured to determine that network congestion exists in transmission processes of a plurality of uplink data flows, where the plurality of uplink data flows include at least two uplink data flows belonging to different applications or include at least two uplink data flows belonging to different users; and the congestion control unit 1502 is configured to perform congestion control on the plurality of uplink data flows based on respective service requirement information of the plurality of uplink data flows, where service requirement information of a third data flow includes at least one of QoS requirement information of an application to which the third data flow belongs, a service type, a user type of a user to which the third data flow belongs, and a priority, and the third data flow is any one of the plurality of uplink data flows.

In another possible implementation, the congestion control apparatus 1500 can correspondingly implement behavior and a capability of the data transmission client in the foregoing method embodiments. For example, the congestion control apparatus 1500 may be the data transmission client, or may be used in the data transmission client, for example, may be a component (a chip, a circuit, or the like) included in the data transmission client. The congestion identification unit 1501 may be configured to perform the step that is of determining, by the data transmission client, that network congestion exists and that is described in the foregoing embodiments. The congestion control unit 1502 may be configured to perform the step that is of performing, by the data transmission client, congestion control on a data flow and that is described in the foregoing method embodiments. The communication unit 1503 is configured to perform all receiving or sending operations that are performed by the data transmission client and described in the foregoing method embodiments.

For other operations performed by the congestion identification unit 1501, the congestion control unit 1502, and the communication unit 1503, refer to related descriptions in the foregoing method embodiments.

It should be noted that, in embodiments of this application, division into the units is an example, and is merely logical function division. During actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for indicating a computer device (which may be a personal computer, a server, or a network device) or a processor (processor) to perform all or a part of the steps of the methods in embodiments of this application. The storage medium includes any medium that can store program code, such as a USB flash drive, a removable hard disk drive, a read-only memory (ROM, Read-Only Memory), a random access memory (RAM, Random Access Memory), a magnetic disk, or an optical disc.

It should be understood that the congestion identification unit 1501 and the congestion control unit 1502 in this embodiment of this application may be implemented by a processor or a processor-related circuit component, and the communication unit 1503 may be implemented by a transceiver, a transceiver-related circuit component, or a communication interface. For example, the congestion control apparatus in the foregoing embodiment may alternatively be in a form shown in FIG. 16. An apparatus 1600 shown in FIG. 16 includes at least one processor 1610 and a memory 1620, and optionally, may further include a communication interface 1630.

A specific connection medium between the processor 1610 and the memory 1620 is not limited in this embodiment of this application.

The apparatus in FIG. 16 further includes the communication interface 1630. When communicating with another device, the processor 1610 may perform signal transmission through the communication interface 1630.

When the communication apparatus is in the form shown in FIG. 16, the processor 1610 in FIG. 16 may invoke computer-executable instructions stored in the memory 1620, so that the apparatus 1600 can perform the method performed by the communication apparatus in any one of the foregoing method embodiments.

An embodiment of this application further provides a chip system. The chip system includes a processor, configured to invoke a computer program or computer instructions stored in a memory, so that the processor performs the method according to any one of the foregoing embodiments.

In a possible implementation, the processor is coupled to the memory through an interface.

In a possible implementation, the chip system further includes the memory, and the memory stores the computer program or the computer instructions.

An embodiment of this application further relates to a processor. The processor is configured to invoke a computer program or computer instructions stored in a memory, so that the processor performs the method according to any one of the foregoing embodiments.

It should be understood that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, and an optical memory) that include computer-usable program code.

These computer program instructions may be stored in a computer-readable memory that can instruct a computer or another programmable data processing device to work in a specific manner, so that the instructions stored in the computer-readable memory generate an artifact that includes an instruction apparatus, where the instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to embodiments of this application without departing from the scope of embodiments of this application. In this case, this application is intended to cover these modifications and variations of embodiments of this application provided that they fall within the scope of protection defined by the claims of this application and their equivalent technologies.

## Claims

1. A congestion control method, wherein the method is applied to a data transmission serving end, the data transmission serving end is connected to a plurality of application servers, and the method comprises:
determining that network congestion exists in transmission processes of a plurality of downlink data flows, wherein the plurality of downlink data flows comprise at least two downlink data flows from different application servers or comprise at least two downlink data flows belonging to different users; and
performing congestion control on the plurality of downlink data flows based on respective service requirement information of the plurality of downlink data flows, wherein service requirement information of a first data flow comprises at least one of QoS requirement information of an application to which the first data flow belongs, a service type, a user type of a user to which the first data flow belongs, and a priority, and the first data flow is any one of the plurality of downlink data flows.

2. The method according to claim 1, wherein determining that the network congestion exists in the transmission processes of the plurality of downlink data flows comprises:
receiving congestion feedback information that is for the first data flow and that is sent by a first data transmission client, wherein the first data flow is a downlink data flow sent by a first application server to a first application client, the first application client is any one of a plurality of application clients of the first application server, and the first data transmission client and the first application client are deployed in a first client device; and
determining, based on the congestion feedback information, that the network congestion exists in a transmission process of the first data flow.

3. The method according to claim 1 or 2, wherein performing congestion control on the plurality of downlink data flows based on the respective service requirement information of the plurality of downlink data flows comprises:
controlling transmission rates of the plurality of downlink data flows based on the service requirement information of the plurality of downlink data flows; or
respectively indicating, based on the service requirement information of the plurality of downlink data flows, the application servers that send the plurality of downlink data flows to perform congestion control on the plurality of downlink data flows.

4. The method according to claim 3, wherein controlling the transmission rates of the plurality of downlink data flows based on the service requirement information of the plurality of downlink data flows comprises:
determining a target transmission rate of each downlink data flow based on priorities of the plurality of downlink data flows; and
controlling transmission of each downlink data flow based on the target transmission rate of each downlink data flow.

5. The method according to claim 3, wherein controlling the transmission rates of the plurality of downlink data flows based on the service requirement information of the plurality of downlink data flows comprises:
determining a target transmission rate of each downlink data flow based on one or more of QoS requirement information, service types, and user types of the plurality of downlink data flows; and
controlling transmission of each downlink data flow based on the target transmission rate of each downlink data flow.

6. The method according to claim 3, wherein controlling the transmission rates of the plurality of downlink data flows based on the service requirement information of the plurality of downlink data flows comprises:
determining transmission priorities of the plurality of downlink data flows based on one or more of QoS requirement information, service types, and user types of the plurality of downlink data flows;
determining a target transmission rate of each downlink data flow based on the transmission priorities of the plurality of downlink data flows; and
controlling transmission of each downlink data flow based on the target transmission rate of each downlink data flow.

7. The method according to any one of claims 3 to 6, wherein respectively indicating, based on the service requirement information of the plurality of downlink data flows, the application servers that send the plurality of downlink data flows to perform congestion control on the plurality of downlink data flows comprises:
determining the target transmission rate of each downlink data flow based on the service requirement information of the plurality of downlink data flows; and
sending a target transmission rate of the first data flow to the first application server that sends the first data flow, to indicate the first application server to control transmission of the first data flow based on the target transmission rate of the first data flow.

8. The method according to any one of claims 3 to 6, wherein respectively indicating, based on the service requirement information of the plurality of downlink data flows, the application servers that send the plurality of downlink data flows to perform congestion control on the plurality of downlink data flows comprises:
determining a target encoding format or a target rendering manner of each downlink data flow based on the service requirement information of the plurality of downlink data flows; and
sending a target encoding format or a target rendering manner of the first data flow to the first application server that sends the first data flow, to indicate the first application server to output the first data flow based on the target encoding format or the target rendering manner of the first data flow.

9. The method according to any one of claims 3 to 6, wherein respectively indicating, based on the service requirement information of the plurality of downlink data flows, the application servers that send the plurality of downlink data flows to perform congestion control on the plurality of downlink data flows comprises:
determining congestion information of each downlink data flow based on the service requirement information of the plurality of downlink data flows, wherein congestion information of the first data flow indicates a network congestion degree in the transmission process of the first data flow; and
sending the congestion information of the first data flow to the first application server that sends the first data flow, to indicate the first application server to perform congestion control on the first data flow based on the congestion information of the first data flow.

10. The method according to any one of claims 1 to 9, wherein before determining that the network congestion exists in the transmission processes of the plurality of downlink data flows, the method further comprises:
receiving one or more of a service type of a first application, user types of a plurality of users of the first application, QoS requirement information of the first application, and a priority of a downlink data flow belonging to the first application that are sent by the first application server, wherein the first application server is an application server that sends the first data flow, and the first application is an application to which the first data flow belongs.

11. The method according to claim 10, wherein the method further comprises:
sending a first message to a network side device, wherein the first message indicates the network side device to perform network congestion detection on the downlink data flow belonging to the first application and add a congestion marker.

12. The method according to claim 10 or 11, wherein the method further comprises:
sending a second message to the first data transmission client, wherein the first data transmission client is deployed in the first client device, the first client device is any one of a plurality of client devices of the first application server, and the second message indicates the first data transmission client to perform congestion marker identification on a received downlink data flow belonging to the first application, and indicates the first data transmission client to send congestion feedback information to the data transmission serving end after identifying the congestion marker in the downlink data flow belonging to the first application.

13. A congestion control method, wherein the method is applied to a data transmission client, the data transmission client is deployed in a client device, and the method comprises:
determining that network congestion exists in transmission processes of a plurality of downlink data flows, wherein the plurality of downlink data flows comprise at least two downlink data flows from different application servers; and
performing congestion control on the plurality of downlink data flows based on respective service requirement information of the plurality of downlink data flows, wherein service requirement information of a first data flow comprises at least one of QoS requirement information of an application to which the first data flow belongs, a service type, and a priority, and the first data flow is any one of the plurality of downlink data flows.

14. A congestion control method, wherein the method is applied to a data transmission serving end, the data transmission serving end is connected to a plurality of application servers, and the method comprises:
determining that network congestion exists in transmission processes of a plurality of uplink data flows, wherein the plurality of uplink data flows comprise at least two uplink data flows belonging to different applications or comprise at least two uplink data flows belonging to different users; and
performing congestion control on the plurality of uplink data flows based on respective service requirement information of the plurality of uplink data flows, wherein service requirement information of a third data flow comprises at least one of QoS requirement information of an application to which the third data flow belongs, a service type, a user type of a user to which the third data flow belongs, and a priority, and the third data flow is any one of the plurality of uplink data flows.

15. The method according to claim 14, wherein determining that the network congestion exists in the transmission processes of the plurality of uplink data flows comprises:
receiving the third data flow from a network side device, wherein the third data flow comprises a plurality of data packets, a packet header of at least one of the plurality of data packets comprises a congestion marker, and the congestion marker indicates that the network congestion exists in a transmission process of the third data flow.

16. The method according to claim 14 or 15, wherein performing congestion control on the plurality of uplink data flows based on the respective service requirement information of the plurality of uplink data flows comprises:
indicating, based on the service requirement information of the plurality of uplink data flows, a data transmission client to control transmission rates of the plurality of uplink data flows; or
respectively indicating, based on the service requirement information of the plurality of uplink data flows, application clients that send the plurality of uplink data flows to perform congestion control on the plurality of uplink data flows.

17. The method according to claim 16, wherein indicating, based on the service requirement information of the plurality of uplink data flows, the data transmission client to control the transmission rates of the plurality of uplink data flows comprises:
determining a target transmission rate of each uplink data flow based on priorities of the plurality of uplink data flows; and
sending a target transmission rate of the third data flow to a first data transmission client, to indicate the first data transmission client to control transmission of the third data flow based on the target transmission rate of the third data flow, wherein the third data flow is an uplink data flow sent by a first application client to a first application server, and the first data transmission client and the first application client are deployed in a first client device.

18. The method according to claim 16, wherein indicating, based on the service requirement information of the plurality of uplink data flows, the data transmission client to control the transmission rates of the plurality of uplink data flows comprises:
determining a target transmission rate of each uplink data flow based on at least one of QoS requirement information, service types, and user types of the plurality of uplink data flows; and
sending a target transmission rate of the third data flow to a first data transmission client, to indicate the first data transmission client to control transmission of the third data flow based on the target transmission rate of the third data flow, wherein the third data flow is an uplink data flow sent by a first application client to a first application server, and the first data transmission client and the first application client are deployed in a first client device.

19. The method according to claim 16, wherein indicating, based on the service requirement information of the plurality of uplink data flows, the data transmission client to control the transmission rates of the plurality of uplink data flows comprises:
determining transmission priorities of the plurality of uplink data flows based on at least one of QoS requirement information, service types, and user types of the plurality of uplink data flows;
determining a target transmission rate of each uplink data flow based on the transmission priorities of the plurality of uplink data flows; and
sending a target transmission rate of the third data flow to a first data transmission client, to indicate the first data transmission client to control transmission of the third data flow based on the target transmission rate of the third data flow, wherein the third data flow is an uplink data flow sent by a first application client to a first application server, and the first data transmission client and the first application client are deployed in a first client device.

20. The method according to any one of claims 16 to 19, wherein respectively indicating, based on the service requirement information of the plurality of uplink data flows, the application clients that send the plurality of uplink data flows to perform congestion control on the plurality of uplink data flows comprises:
determining the target transmission rate of each uplink data flow based on the service requirement information of the plurality of uplink data flows; and
sending the target transmission rate of the third data flow to the first application client that sends the third data flow, to indicate the first application client to control transmission of the third data flow based on the target transmission rate of the third data flow.

21. The method according to any one of claims 16 to 19, wherein respectively indicating, based on the service requirement information of the plurality of uplink data flows, the application clients that send the plurality of uplink data flows to perform congestion control on the plurality of uplink data flows comprises:
determining a target encoding format or a target rendering manner of each uplink data flow based on the service requirement information of the plurality of uplink data flows; and
sending a target encoding format or a target rendering manner of the third data flow to the first application client that sends the third data flow, to indicate the first application client to output the third data flow based on the target encoding format or the target rendering manner of the third data flow.

22. The method according to any one of claims 16 to 19, wherein respectively indicating, based on the service requirement information of the plurality of uplink data flows, the application clients that send the plurality of uplink data flows to perform congestion control on the plurality of uplink data flows comprises:
determining congestion information of each uplink data flow based on the service requirement information of the plurality of uplink data flows, wherein congestion information of the third data flow indicates a network congestion degree in the transmission process of the third data flow; and
sending the congestion information of the third data flow to the first application client that sends the third data flow, to indicate the first application client to perform congestion control on the third data flow based on the congestion information of the third data flow.

23. The method according to any one of claims 14 to 22, wherein before determining that the network congestion exists in the transmission processes of the plurality of uplink data flows, the method further comprises:
receiving one or more of a service type of a first application, user types of a plurality of users of the first application, QoS requirement information of the first application, and a priority of an uplink data flow belonging to the first application that are sent by the first application server, wherein the first application server is an application server that receives the third data flow, and the first application is an application to which the third data flow belongs.

24. The method according to claim 23, wherein the method further comprises:
sending a third message to a network side device, wherein the third message indicates the network side device to perform network congestion detection on the uplink data flow belonging to the first application and add a congestion marker.

25. A congestion control method, wherein the method is applied to a data transmission client, the data transmission client is deployed in a client device, and the method comprises:
determining that network congestion exists in transmission processes of a plurality of uplink data flows, wherein the plurality of uplink data flows comprise at least two uplink data flows belonging to different applications; and
performing congestion control on the plurality of uplink data flows based on respective service requirement information of the plurality of uplink data flows, wherein service requirement information of a third data flow comprises at least one of QoS requirement information of an application to which the third data flow belongs, a service type, and a priority, and the third data flow is any one of the plurality of uplink data flows.

26. A congestion control apparatus, wherein the apparatus is used in a data transmission serving end, or the apparatus is the data transmission serving end, the data transmission serving end is connected to a plurality of application servers, and the apparatus comprises:
a congestion identification unit, configured to determine that network congestion exists in transmission processes of a plurality of downlink data flows, wherein the plurality of downlink data flows comprise at least two downlink data flows from different application servers or comprise at least two downlink data flows belonging to different users; and
a congestion control unit, configured to perform congestion control on the plurality of downlink data flows based on respective service requirement information of the plurality of downlink data flows, wherein the service requirement information of a first data flow comprises at least one of QoS requirement information of an application to which the first data flow belongs, a service type, a user type of a user to which the first data flow belongs, and a priority, and the first data flow is any one of the plurality of downlink data flows.

27. A congestion control apparatus, wherein the apparatus is used in a data transmission client, or the apparatus is the data transmission client, the data transmission client is deployed in a client device, and the apparatus comprises:
a congestion identification unit, configured to determine that network congestion exists in transmission processes of a plurality of downlink data flows, wherein the plurality of downlink data flows comprise at least two downlink data flows from different application servers; and
a congestion control unit, configured to perform congestion control on the plurality of downlink data flows based on respective service requirement information of the plurality of downlink data flows, wherein service requirement information of a first data flow comprises at least one of QoS requirement information of an application to which the first data flow belongs, a service type, and a priority, and the first data flow is any one of the plurality of downlink data flows.

28. A congestion control apparatus, wherein the apparatus is used in a data transmission serving end, or the apparatus is used in the data transmission serving end, the data transmission serving end is connected to a plurality of application servers, and the apparatus comprises:
a congestion identification unit, configured to determine that network congestion exists in transmission processes of a plurality of uplink data flows, wherein the plurality of uplink data flows comprise at least two uplink data flows belonging to different applications or comprise at least two uplink data flows belonging to different users; and
a congestion control unit, configured to perform congestion control on the plurality of uplink data flows based on respective service requirement information of the plurality of uplink data flows, wherein service requirement information of a third data flow comprises at least one of QoS requirement information of an application to which the third data flow belongs, a service type, a user type of a user to which the third data flow belongs, and a priority, and the third data flow is any one of the plurality of uplink data flows.

29. A congestion control apparatus, wherein the apparatus is used in a data transmission client, or the apparatus is the data transmission client, the data transmission client is deployed in a client device, and the apparatus comprises:
a congestion identification unit, configured to determine that network congestion exists in transmission processes of a plurality of uplink data flows, wherein the plurality of uplink data flows comprise at least two uplink data flows belonging to different applications; and
a congestion control unit, configured to perform congestion control on the plurality of uplink data flows based on respective service requirement information of the plurality of uplink data flows, wherein service requirement information of a third data flow comprises at least one of QoS requirement information of an application to which the third data flow belongs, a service type, and a priority, and the third data flow is any one of the plurality of uplink data flows.

30. A chip system, comprising a communication interface and a processor, wherein
the communication interface is configured to: input and/or output signaling or data; and
the processor is configured to execute a computer-executable program, so that a device on which the chip system is installed performs the method according to any one of claims 1 to 12, claim 13, claims 14 to 24, or claim 25.
